# EUROPEAN PATENT APPLICATION

(11) **EP 2 463 758 A1**
(43) Date of publication of application: **13.06.2012**
(21) Application number: 10806421.3
(22) Date of filing: 02.08.2010
(51) Int. Cl.: G06F 3/041, C08L 101/02

(54) **TOUCH PANEL**

(30) Priority: 05.08.2009 JP 2009182366
(71) Applicant: Asahi Glass Company, Limited, Tokyo 100-8405 (JP)
(72) Inventor: YASUDA, Teruhiko, Tokyo 100-8405 (JP); SHIMOMA, Hitoshi, Tokyo 100-8405 (JP); ENNA, Genichirou, Tokyo 100-8405 (JP)
(74) Representative: Hartz, Nikolai
(86) International application number: PCT/JP2010/063032
(87) International publication number: WO 2011/016422

(57) **Abstract**

To provide a touch panel having a surface protective film laminated on a touch pad via an adherence substance layer having a low adhesive strength and excellent removability, having a good holding power, and having an adhesive strength with a small increase with time.

A touch panel comprising a display module 1, a touch pad 2 laminated on a display screen of the display module 1 and a surface protective film 3 laminated on the viewer side of the touch pad 2, wherein between the surface protective film 3 and the touch pad 2, a first adherence substance layer 11 obtained by curing a first curable composition containing a silyl group-containing polymer (S) is interposed. The silyl group-containing polymer (S) is a polymer having a polyether chain, a polyester chain and/or a polycarbonate chain in its main chain and having a hydrolyzable silyl group at its molecular terminal.

## Description

### TECHNICAL FIELD

The present invention relates to a touch panel comprising a display module, a touch pad laminated on a display screen of the display module and a surface protective film laminated on the viewer side of the touch pad.

### BACKGROUND ART

Touch panels have been used in wider fields more heavily along with development of electronic equipment. For example, on liquid crystal displays of portable game machines, digital video cameras, car navigation systems, small music players, small video players, cellular phones, etc., a touch pad is provided on a display screen of a liquid crystal display module, and the equipment can be operated by pressing the touch pad at the displayed portion on the display screen.

The surface on the viewer side of the touch pad is stained or scratched by the contact with a finger or a pen, and thus a surface protective film is provided in some cases. The surface protective film is preferably pealed when stained or scratched and replaced with a new surface protective film.

For example, the following Patent Document 1 discloses, as a transparent pressure-sensitive adhesive sheet to removably contact-bond a liquid crystal panel and a protective transparent plate, a sheet made of a cured product of a composition comprising a polyoxyalkylene polymer having an alkenyl group, a compound at least two hydrosilyl groups and a hydrosilyl-forming catalyst.

The following Patent Document 2 discloses a method of removably bonding an optical member to a substrate via a removable adherence substance layer in a touch pad. It discloses, as a pressure-sensitive adhesive to constitute the removable adherence substance layer, a pressure-sensitive adhesive containing as the main component an ethylene vinyl alcohol pressure-sensitive adhesive, a polyacrylic ester pressure-sensitive adhesive, a polymethacrylic ester pressure-sensitive adhesive or a silicone pressure-sensitive adhesive.

### PRIOR ART DOCUMENTS

### PATENT DOCUMENTS

- Patent Document 1:: JP-A-2008-266473
- Patent Document 2:: JP-A-2009-15871

### DISCLOSURE OF INVENTION

### TECHNICAL PROBLEM

An adherence substance layer to attach a surface protective film to the touch pad is required to have a holding power so that the film will not easily slip or be separated, to have a low adhesive strength to such an extent that it can easily be separated and replaced when stained or scratched, and to have an adhesive strength with a small increase with time. Further, a pressure-sensitive adhesive layer to be used to laminate the display module and the touch pad is also preferably easily separated in the same manner as the adherence substance layer to attach the surface protective film.

However, the technique disclosed in Patent Document 1 requires a high removability for the pressure-sensitive adhesive layer, and the polyacrylic ester pressure-sensitive adhesive disclosed in Patent Document 2 has an adhesive strength with a great increase with time. Further, with the silicone pressure-sensitive adhesive, electronic components are likely to be stained with silicone, and a more suitable adherence substance to be used to attach a surface protective film or to be used to bond the display module and the touch pad, has been desired.

Under these circumstances, the present invention has been made to provide a touch panel having a surface protective film laminated on a touch pad via an adherence substance layer having a low adhesive strength and excellent removability, having a good holding power and having an adhesive strength with a small increase with time.

More preferably, its object is to provide a touch panel having a display module and a touch pad laminated via an adherence substance layer having a low adhesive strength and excellent removability, having a good holding power and having an adhesive strength with a small increase with time.

### SOLUTION TO PROBLEM

To achieve the above objects, the touch panel of the present invention comprises a display module, a touch pad laminated on a display screen of the display module and a surface protective film laminated on the viewer side of the touch pad, wherein between the surface protective film and the touch pad, a first adherence substance layer obtained by curing a first curable composition containing the flowing silyl group-containing polymer (S) is interposed:
silyl group-containing polymer (S): a silyl group-containing polymer having a polyether chain, a polyester chain and/or a polycarbonate chain in its main chain and having a hydrolyzable silyl group at its molecular terminal.

The silyl group-containing polymer (S) in the first curable composition preferably contains the following silyl group-containing polymer (S1):
silyl group-containing polymer (S1): a silyl group-containing polymer obtained by introducing a hydrolyzable silyl group to a terminal of at least one polyol compound selected from the group consisting of a polyether polyol, a polyester polyol, a polycarbonate polyol and a polyether polyester polyol.

Further, it is preferred that between the display module and the touch pad, a second adherence substance layer obtained by curing a second curable composition containing the above silyl group-containing polymer (S) is interposed.

It is preferred that the silyl group-containing polymer (S) in the second curable composition contains the above silyl group-containing polymer (S1), or the following silyl group-containing polymer (S2) or (S3):
silyl group-containing polymer (S2): a silyl group-containing polymer obtained by introducing a hydrolyzable silyl group to a terminal of a polyurethane prepolymer obtained by reacting at least one polyol compound selected from the group consisting of a polyether polyol, a polyester polyol, a polycarbonate polyol and a polyether polyester polyol with a polyisocyanate compound;
silyl group-containing polymer (S3): a silyl group-containing polymer obtained by introducing a hydrolyzable silyl group to a molecular terminal of a polyurethane polymer obtained by reacting at least one polyol compound selected from the group consisting of a polyether polyol, a polyester polyol, a polycarbonate polyol and a polyether polyester polyol with a polyisocyanate compound to obtain a polyurethane prepolymer, and further subjecting the polyurethane prepolymer to a chain extending reaction by a chain extending agent.

It is preferred that the hydrolyzable silyl group is one introduced by using at least one silane compound selected from the group consisting of an isocyanate silane, an aminosilane, a mercaptosilane, an epoxysilane and a hydrosilane.

It is preferred that the hydrolyzable silyl group is a trialkoxysilyl group.

It is preferred that each of the first adherence substance layer and the second adherence substance layer has a peel adhesion strength of at most 8 N/25 mm.

### ADVANTAGEOUS EFFECTS OF INVENTION

According to the present invention, a touch panel having a surface protective film laminated on a touch pad via an adherence substance layer having a low adhesive strength and excellent removability, having a good holding power and having an adhesive strength with a small increase with time, can be obtained.

Further, a touch panel having a display module and a touch pad laminated via an adherence substance layer having a low adhesive strength and excellent removability, having a good holding power and having an adhesive strength with a small increase with time, can be obtained, which is useful as a touch panel for an electronic equipment such as a liquid crystal display module.

### BRIEF DESCRIPTION OF DRAWING

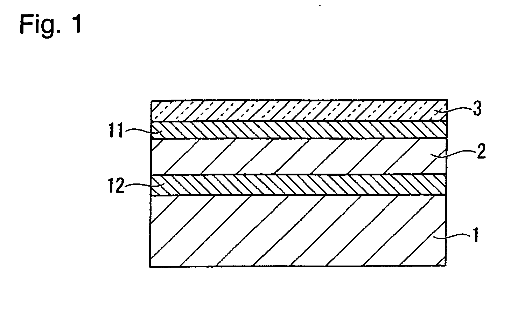

Fig. 1 is a cross-sectional view schematically illustrating one embodiment of a touch panel of the present invention.

### DESCRIPTION OF EMBODIMENTS

In this specification, the number average molecular weight (Mn) is the molecular weight as calculated as polystyrene obtained by measurement by gel permeation chromatography employing a calibration curve prepared by using a standard polystyrene test sample having a known molecular weight.

In this specification, the average hydroxy value (OHV) is a value measured in accordance with JIS K-1557-6.4.

In this specification, a polyether polyester polyol is a polyol having an ether bond and an ester bond.

In this specification, a pressure-sensitive adhesive is an adhesive which is a solid having tack at room temperature, which adheres to an adherend when contacted and pressurized, and which has removability so that it can be separated without leaving an adhesive deposit. On the other hand, an adhesive other than the pressure-sensitive adhesive is required such that the adhesive (in the case of a curable adhesive, the adhesive after cured) is hardly separated from the adherend. Hereinafter in this specification, in order to distinguish the pressure-sensitive adhesive from an adhesive, an adhesive is one other than the pressure-sensitive adhesive. Further, the pressure-sensitive adhesive will sometimes be referred to as PSA.

The pressure-sensitive adhesive may be a pressure-sensitive adhesive of a type wherein a curable composition is cured to be a pressure-sensitive adhesive. For example, in a case where a pressure-sensitive adhesive tape is to be produced, a layer of a curable composition is formed on the substrate surface, and then the curable composition is cured to form a layer of a pressure-sensitive adhesive. The substrate and the pressure-sensitive adhesive layer are bonded by the adhesion strength when the curable composition is cured, and as the adhesion strength is stronger than the adhesive strength to the adherend by the pressure-sensitive adhesive layer, the substrate is hardly separated from the pressure-sensitive adhesive layer when the pressure-sensitive adhesive layer is removed from the adherend. In such a manner, a pressure-sensitive adhesive formed from a curable composition is required to exhibit adhesion when the curable composition is cured and removability of the pressure-sensitive adhesive formed after curing. Thus, a pressure-sensitive adhesive formed from a curable composition is required to have properties different from those of a curable adhesive.

The present invention relates to a pressure-sensitive adhesive formed from a curable composition, and hereinafter a curable composition to be a pressure-sensitive adhesive after cured will be referred to as "a curable composition", and a cured product having tack formed by curing the curable composition will be referred to as "an adherence substance".

In this specification, pressure-sensitive adhesives may sometimes be classified by the peel adhesive strength (peel strength from the adherend). A case where the peel adhesive strength exceeds 0 N/25 mm and is at most 1 N/25 mm may be referred to as "weakly adhesive"; a case where the peel adhesive strength exceeds 1 N/25 mm and is at most 8 N/25 mm as "low adhesive"; a case where the peel adhesive strength exceeds 8 N/25 mm and is at most 15 N/25 mm as "moderately adhesive"; and a case where the peel adhesive strength exceeds 15 N/25 mm and is at most 50 N/25 mm as "strongly adhesive". Unless otherwise specified, the peel adhesive strength is in accordance with the following test method in accordance with the 180° peeling method as defined in JIS Z-0237(1999)-8.3.1.

That is, in an environment of 23°C, a pressure-sensitive adhesive sheet test piece to be measured (width: 25 mm) is attached to a stainless steel plate (SUS 304(JIS)) having a thickness of 1.5 mm and treated by bright annealing, and press-bonded by a rubber roll having a mass of 2 kg. 30 minutes later, the peel strength (180° peeling, pulling speed: 300 mm/min) is measured by means of a tensile tester as defined in JIS B-7721. The value, thus obtained, of the peel strength after 30 minutes from adhesion is taken as the "peel adhesive strength" in this specification.

### <TOUCH PANEL>

Fig. 1 is a cross-sectional view schematically illustrating one embodiment of a touch panel of the present invention. In Fig. 1, the reference symbol 1 represents a display module, 2 a touch pad, 3 a surface protective film, 11 a first adherence substance layer and 12 a second adherence substance layer.

In the touch panel according to the present embodiment, the touch pad 2 is laminated on a display screen of the display module 1 via the second adherence substance layer 12, and the surface protective film 3 is laminated on the viewer side surface of the touch pad 2 via the first adherence substance layer.

In the present invention, the second adherence substance layer 12 is not essential, and the display module 1 and the touch pad 2 may be bonded by means of an adhesive layer, but are preferably laminated via the removable adherence substance layer 12. Since the display module 1 and the touch pad 2 are removable, in a case where bonding failure such as inclusion of foreign matters, bubbles or the like occurs during operation of bonding and laminating them, they can be removed and bonded again, thus leading to an improvement in the production yield. Further, at the time of disposal of the touch panel, the display module 1 and the touch pad 2 can be easily separated and sorted, such being preferred in view of recyclability.

### <DISPLAY MODULE>

The display module 1 is not limited so long as it can constitute a touch panel, and a known display module such as a liquid crystal display (LCD), a plasma display (PDP) or a light emitting diode (LED) display may be properly used. In this specification, the outside face on the viewer side of the display module 1 i.e. the face to which the touch pad 2 is attached corresponds to a display screen. The material of the display screen is usually glass or a plastic. The plastic is preferably transparent, and it may, for example, be an acrylic resin, a polyester or a polycarbonate.

### <TOUCH PAD>

The touch pad 2 has a touch pad main body provided with a transparent substrate, a transparent electroconductive film and a means (such as an electric circuit) of electrically detecting the input position, and in addition has an optical member such as a polarizing film, a circularly polarizing film or a wave plate; an antireflection layer; a color tone-correcting layer; a protective layer or the like properly laminated.

In the touch pad 2, the material of the outside face on the display module 1 side and the material of the outside face on the viewer side are usually a plastic. The plastic is preferably transparent, and it may, for example, be an acrylic resin, a polyester or a polycarbonate.

### <SURFACE PROTECTIVE FILM>

The surface protective film 3 comprises a plastic film. The material of the plastic film may, for example, be a polyester, a polyamide, a polyolefin, a polycarbonate, an acrylic resin or a fluororesin. Among them, a polyolefin, a polyester, a polycarbonate or an acrylic resin is preferred in view of the transparency, the dimensional stability, the economical efficiency, etc. The material of the plastic film may contain various additives. Such additives may, for example, be an antistatic agent, an UV absorber and a stabilizer. The plastic film may be subjected to hardening, antistatic finish, soil release finish or anti-glare finish, and when such finish is applied, more preferred properties of the surface protective film for a touch panel will be obtained. Further, adhesion-facilitating treatment, corona treatment or plasma treatment may also be applied.

The polyolefin is preferably polypropylene in view of excellent mechanical properties, and particularly preferred is a biaxially oriented polypropylene (OPP) film.

The polyester may, for example, be polyethylene terephthalate (PET), polybutylene terephthalate (PBT) or polyethylene naphthalate (PEN).

Such a resin may contain another copolymer component, or may be a mixture with another resin.

The thickness of the surface protective film 3 is not particularly limited and is preferably from 5 to 500 µm in view of handling efficiency, particularly preferably from 10 to 200 µm.

It is preferred that the surface protective film 3 and the first adherence substance layer 11 are not easily separated. Accordingly, to the surface of the surface protective film 3 to be on the first adherence substance layer 11 side, adhesion-facilitating treatment may be applied. The adhesion-facilitating treatment is a treatment to improve the adhesion strength between the surface protective film 3 and the first adherence substance layer 11 and is carried out before a curable composition is applied to the surface protective film 3.

Further, between the surface protective film 3 and the first adherence substance layer 11, one or more interlayers may be present. The interlayer is preferably one having a high adhesion strength to a layer (the surface protective film 3, the first adherence substance layer 11 or another interlayer) to be in contact with the interlayer. The interlayer is preferably a layer (such as a primer layer) to be formed by the adhesion-facilitating treatment of the surface protective film 3. For example, a layer formed by the primer treatment of the adhesion-facilitating treatment as described above corresponds to the interlayer.

### <ADHESION-FACILITATING TREATMENT>

The adhesion-facilitating treatment on the surface protective film 3 may, for example, be plasma treatment, corona discharge treatment, flame treatment, ultraviolet ray treatment, primer treatment or blast treatment. Such a treatment may be a single treatment or a combination of two or more of the above treatments. Among them, plasma treatment, corona discharge treatment or primer treatment is preferred because the burden to the surface protective film 3 is small, the treatment itself is easy, it is possible to improve the adhesion strength between the surface protective film 3 and the adherence substance layer uniformly, and it has little influence on the optical properties.

The plasma treatment is a method to modify the surface by exciting a gas by using a high-frequency power source to put the gas into a plasma state where the reactivity is high and modifying the surface of the surface protective film 3 by the gas in a plasma state. The corona discharge treatment is a method to modify the surface of the surface protective film 3 by applying a high alternating-current voltage between electrodes under atmospheric pressure to excite a corona discharge and exposing the surface to the corona discharge. The flame treatment is a method to modify the surface of the surface protective film 3 by using a flame. The ultraviolet ray treatment is a method to modify the surface of the surface protective film 3 by exposing the film to ultraviolet rays (particularly far-ultraviolet rays having a wavelength of from 180 to 250 nm). The blast treatment is a method to modify the surface of the surface protective film 3 by letting a grinding material in the form of fine-particles collide with the surface. In any of these cases, the energy amount given to the substrate surface is suitably adjusted in accordance with the state of the substrate.

The primer treatment is a method to form a primer layer by applying a primer to a substrate surface. The primer is preferably, for example, a silane-type primer, an isocyanate-type primer, a urethane-type primer or a rubber-type primer. At the time of application of the primer, various types of additives may be added. For example, an electrical conductivity-imparting agent may be added. The thickness of the primer layer after drying is preferably from 0.01 to 10 µm, more preferably from 0.02 to 5 µm, from the viewpoint of adhesion strength between the surface protective film 3 and the adherence substance layer.

As the silane-type primer, a silane coupling agent having the above-described hydrolyzable group is preferred.

The isocyanate-type primer is preferably an isocyanate compound to be exemplified for the after-mentioned substrate-anchoring force-improving agent (P).

As the urethane-type primer, an isocyanate group-terminated urethane prepolymer or a hydroxy group-terminated urethane prepolymer may be used. The hydroxy group-terminated urethane prepolymer may, for example, be MP2000 (manufactured by CEMEDINE Co., Ltd.).

The rubber-type primer may, for example, be No. 40 (product name) manufactured by The Yokohama Rubber Co., Ltd. as a solvent type synthetic rubber-type primer.

In the present embodiment, one layer of the surface protective film 3 is provided on the viewer side of the touch pad 2 via the first adherence substance layer 11, and one or more surface protective film layers 3 may further be laminated thereon respectively via the first adherence substance layer 11.

### <FIRST ADHERENCE SUBSTANCE LAYER>

The first adherence substance layer 11 is made of a cured product obtained by curing a first curable composition containing a silyl group-containing polymer (S). The first curable composition contains at least one additive in addition to the silyl group-containing polymer (S), and the additive is preferably at least a curing catalyst. Further, it preferably contains water as a curing agent in addition to the curing catalyst. However, a curable composition containing no water may be used, so that the silyl group-containing polymer (S) is cured by moisture in the atmosphere (usually in the air).

A preferred curable composition is a curable composition containing at least two additives of a curing catalyst and water. The curable composition containing water may be cured in an atmosphere containing moisture. Further, in a case where the curable composition is cured between the substrate and the removable sheet, a curable composition containing water is used since the substrate and the removable sheet are usually hardly permeable to moisture. As the curing reaction starts upon contact of the silyl group-containing polymer (S) with water, it is preferred to blend water immediately before the curable composition is cured.

In a case where a curable composition containing no water is used, the curable composition is exposed to an atmosphere containing moisture so that the moisture in the atmosphere is brought into contact with the curable composition, whereby the composition is cured. The curing rate can be adjusted by adjusting the moisture content, the temperature, etc. in the atmosphere containing moisture.

The silyl group-containing polymer (S) is a polymer having a polyether chain, a polyester chain and/or a polycarbonate chain in its main chain and having a hydrolyzable silyl group at its molecular terminal. It is preferred that as the silyl group-containing polymer (S), one of the following (S1) to (S3) or two or more of them in combination are used.

The silyl group-containing polymer (S) may contain a polymer having a hydrolyzable silyl group (hereinafter referred to as "other hydrolyzable silyl group-containing polymer" not included in any of the following (S1) to (S3). The proportion of such other hydrolyzable silyl group-containing polymer is preferably at most 30 mass%, more preferably at most 10 mass% of the silyl group-containing polymer (S).

Particularly, (S1) is preferably contained, whereby a cured product to be obtained is excellent in the weakly adhesive properties and is excellent in flexibility and wetability, and it is preferred that from 70 to 100 mass% of the silyl group-containing polymer (S) is the silyl group-containing polymer (S1).

The peel adhesive strength of the first adherence substance layer 11 is preferably at most 8 N/25 mm, more preferably more than 0 N/25 mm and at most 8 N/25 mm, further preferably more than 0 N/25 mm and at most 1 N/25 mm, particularly preferably from 0.005 to 0.8 N/25 mm.

If the first adherence substance layer 11 is too thin, no sufficient adhesive strength will be obtained, and if it is too thick, such is unfavorable in view of the stability of the adhesive strength and the economical efficiency. The thickness is preferably from 3 to 100 µm, more preferably from 10 to 60 µm in view of the heat resistance.

### <SECOND ADHERENCE SUBSTANCE LAYER>

The second adherence substance layer 12 is preferably made of a cured product obtained by curing a second curable composition containing the above silyl group-containing polymer (S). It is preferred that as the silyl group-containing polymer (S), one of the following (S 1) to (S3) or two or more of them in combination are used.

The silyl group-containing polymer (S) in the first curable composition and the silyl group-containing polymer (S) in the second curable composition may be the same or different. The second curable composition contains at least one additive in addition to the silyl group-containing polymer (S) in the same manner as the first curable composition, and the additive is preferably at least a curing catalyst. Further, it preferably contains water as a curing agent in addition to the curing catalyst. However, a curable composition containing no water may be used, so that the silyl group-containing polymer (S) is cured by moisture in the atmosphere (usually in the air).

The silyl group-containing polymer (S) may contain other hydrolyzable silyl group-containing polymer not included in any of the following (S1) to (S3). The proportion of such other hydrolyzable silyl group-containing polymer is preferably at most 30 mass%, more preferably at most 10 mass%, of the silyl group-containing polymer (S).

The peel adhesive strength of the second adherence substance layer 12 is preferably at most 8 N/25 mm, more preferably more than 0 N/25 mm and at most 8 N/25 mm, further preferably more than 0 N/25mm and at most 1 N/25 mm, particularly preferably from 0.005 to 0.8 N/25 mm.

Particularly, it is preferred that the peel adhesive strength of each of the first adherence substance layer 11 and the second adherence substance layer 12 is at most 8 N/25 mm and that the peel adhesive strength of the second adherence substance layer 12 is higher than the peel adhesive strength of the first adherence substance layer 11. In such a case, when the surface protective film 3 is exchanged for example, the surface protective film 3 will easily be separated from the touch pad 2 without separation of the display module 1 and the touch pad 2. The difference in the peel adhesive strength between the second adherence substance layer 12 and the first adherence substance layer 11 is preferably about more than 0 and at most 0.8 N/25 mm, more preferably about more than 0 and at most 0.6 N/25 mm.

The silyl group-containing polymer (S) in the second curable composition preferably contains the silyl group-containing polymer (S2) or (S3), whereby the peel adhesive strength of the second adherence substance layer 12 is likely to be higher than the peel adhesive strength of the first adherence substance layer 11. It may contain both the silyl group-containing polymers (S2) and (S3).

It is more preferred that the silyl group-containing polymer (S) in the first curable composition comprises the silyl group-containing polymer (S1), and that the silyl group-containing polymer (S) in the second curable composition comprises the silyl group-containing polymer (S2) and/or (S3).

If the second adherence substance layer 12 is too thin, no sufficient adhesive strength will be obtained, and if it is too thick, such is unfavorable in view of the stability of the adhesive strength and the economical efficiency. The thickness is preferably from 5 to 100 µm, more preferably from 10 to 60 µm in view of the heat resistance.

### [SILYL GROUP-CONTAINING POLYMER (S1)]

The silyl group-containing polymer (S1) is obtained by introducing a hydrolyzable silyl group to a terminal of at least one polyol compound selected from the group consisting of a polyether polyol, a polyester polyol, a polycarbonate polyol and a polyether polyester polyol.

The silyl group-containing polymer (S1) is particularly preferably one obtained by introducing a hydrolyzable silyl group to the above polyol compound by the method described in any one of hereinafter-described (PQ1) to (PQ5).

### [SILYL GROUP-CONTAINING POLYMER (S2)]

The silyl group-containing polymer (S2) is a silyl group-containing polymer obtained by introducing a hydrolyzable silyl group to a terminal of a polyurethane prepolymer obtained by reacting at least one polyol compound selected from the group consisting of a polyether polyol, a polyester polyol, a polycarbonate polyol and a polyether polyester polyol with a polyisocyanate compound.

The silyl group-containing polymer (S2) is particularly preferably one obtained by introducing a hydrolyzable silyl group to the polyurethane prepolymer by the method described in any one of hereinafter-described (PQ1) to (PQ5).

### [SILYL GROUP-CONTAINING POLYMER (S3)]

The silyl group-containing polymer (S3) is a silyl group-containing polymer obtained by introducing a hydrolyzable silyl group to a molecular terminal of a polyurethane polymer obtained by reacting at least one polyol compound selected from the group consisting of a polyether polyol, a polyester polyol, a polycarbonate polyol and a polyether polyester polyol with a polyisocyanate compound to obtain a polyurethane prepolymer, and further subjecting the polyurethane prepolymer to a chain extending reaction by using a chain extending agent.

The silyl group-containing polymer (S3) is particularly preferably one obtained by introducing a hydrolyzable silyl group to the polyurethane polymer by the method described in any one of hereinafter-described (PQ1) to (PQ5).

### [POLYOL COMPOUND]

The polyether polyol in the present invention is a polyol having a polyether chain (-OR¹ -)ₙ [wherein R¹ is a C₂₋₄ alkylene group, and n1 is an integer of from 1 to 1,000] and having no polyester chain.

The polyester polyol is a polyol having a polyester chain (-OC(O)-R²-)ₙ₂ [wherein R² is a C₂₋₈ alkylene group, and n2 is an integer of from 1 to 1,000] and having no polyether chain.

The polycarbonate polyol is a polyol having a polycarbonate chain (-OC(O)-O-R³-)ₙ₃ [wherein R³ is a C₂₋₂₀ alkylene group, and n3 is an integer of from 1 to 1,000] and having no polyether chain and no polyester chain.

The polyether polyester polyol is a polyol having both a polyether chain and a polyester chain.

As the polyol compound, one type of these polyols may be used singly, or two or more types of them may be used in combination.

It is particularly preferred to use at least one polyol having a polyether framework from the viewpoint of ensuring flexibility of the adherence substance. The polyol having a polyether framework means a polyol having a polyether chain such as a polyether polyol or a polyether polyester polyol.

It is considered that the flexibility of an adherence substance has an effect to suppress so-called zipping, which is a phenomenon such that when an adherence substance is peeled from an adherend, it is not smoothly peeled and peeling sound is emitted. Further, by the polyol having a polyether framework, it is possible to lower the viscosity of the curable composition. Further, by the polyol having a polyether framework, it is possible to lower the surface resistance of the adherence substance and to suppress the peel electrostatic charge.

Further, an oxyethylene group may be contained as a part of the polyether chain, whereby the surface resistance can be more reduced. In a case where an oxyethylene group is contained, the proportion of the oxyethylene groups is preferably from 5 to 70 mass%, more preferably from 10 to 50 mass%, in the all polyether chains. The oxyethylene groups may be present in a polyether chain as a block or in a random manner.

The proportion of ether bonds (-OR¹ -) in the silyl group-containing polymer (S) is preferably from 40 to 100 mol%, more preferably from 50 to 100 mol%, further preferably from 60 to 100 mol%, in the total (100 mol%) of ether bonds and ester bonds (-OC(O)-R²-)_{.}

As a polyol compound to obtain the silyl group-containing polymer (S), it is particularly preferred to use one or more types of polyols selected from a polyether polyol and a polyether polyester polyol, or to use one or more types of polyols selected from a polyether polyol and a polyether polyester polyol in combination with one or more types of polyols selected from a polyester polyol and a polycarbonate polyol. It is further preferred to use a polyether polyol and/or a polyether polyester polyol.

The polyether polyol is preferably a polyoxyalkylene polyol. The alkylene group constituting the polyoxyalkylene polyol may, for example, be an ethylene group, a trimethylene group, a tetramethylene group, a pentamethylene group, a hexamethylene group, a propylene group, a butylene group or a methyltrimethylene group. Such a polyether polyol may be obtained by subjecting a corresponding cyclic ether compound to ring-opening polymerization. The cyclic ether compound may, for example, be oxetane, tetrahydrofuran or tetrahydropyran which is a 4-membered ring, 5-membered ring or 6-membered ring. The 3-membered ring may be an epoxide compound, and may, for example, be specifically ethylene oxide, propylene oxide or butylene oxide. These epoxide compounds may be used alone or in combination as a mixture of two or more.

The polyether polyol may, for example, be specifically polyoxytetramethylene polyol, polyoxyethylene polyol, polyoxypropylene polyol or polyoxyethylene polyoxypropylene polyol.

The polyether polyester polyol may, for example, be a polyol obtained by condensation polymerization of an ether diol with a dibasic acid compound or a polyol obtained by ring-opening copolymerization (particularly preferably random copolymerization) of an epoxide compound with a cyclic ester. The ether diol may, for example, be diethylene glycol, dipropylene glycol, polyoxyethylene glycol, polyoxypropylene glycol or polyoxyethylene polyoxypropylene glycol. The dibasic acid compound may, for example, be phthalic acid, maleic acid, adipic acid or fumaric acid. The cyclic ester (lactone) may, for example, be β-propiolactone (number of carbon atoms: 3), δ-valerolactone (number of carbon atoms: 5) or ε-caprolactone (number of carbon atoms: 6). Among them, ε-caprolactone is more preferred. The epoxide compound is as previously described.

The polyester polyol may, for example, be a polyol obtained by condensation polymerization of a low molecular diol such as ethylene glycol, propylene glycol, 1,4-butanediol or 1,6-hexanediol with the above dibasic acid compound.

The polycarbonate polyol is preferably one obtained by reacting a low molecular carbonate compound such as an alkylene carbonate, a dialkyl carbonate or a diaryl carbonate with a diol compound. Specific examples include polyhexamethylene carbonate diol, poly(3-methypentene carbonate) diol and polypropylene carbonate diol. Further, a mixture thereof or a copolymer thereof may also be mentioned.

The number of hydroxy groups of the polyol compound is preferably from 2 to 3, most preferably 2. That is, it is particularly preferred that a diol is used as the polyol compound. It is because if the number of hydroxy groups is within this range, it is easy to suppress the viscosity of the silyl group-containing polymer (S) to be obtained at a low level.

Further, the average hydroxy value of the polyol compound is preferably from 5 to 225 mgKOH/g, more preferably from 7 to 115 mgKOH/g, particularly preferably from 10 to 112 mgKOH/g. It is because if the average hydroxy value is within this range, it is easy to suppress the viscosity of the silyl group-containing polymer (S) to be obtained at a low level.

Particularly, in the case of obtaining the silyl group-containing polymer (S1), the average hydroxy value of the polyol compound is preferably from 5 to 112 mgKOH/g, more preferably from 7 to 56 mgKOH/g.

Further, in the case of obtaining the silyl group-containing polymer (S2) or (S3), the average hydroxy value of the polyol compound is preferably from 25 to 225 mgKOH/g, more preferably from 30 to 115 mgKOH/g.

### [POLYISOCYANATE COMPOUND]

In order to obtain the silyl group-containing polymer (S2) or (S3), a polyurethane prepolymer is used. As the polyisocyanate compound used for synthesis of this polyurethane prepolymer, a known one may be used. Specifically, it may, for example, be a diisocyanate compound such as diphenylmethane diisocyanate, tolylene diisocyanate, xylylene diisocyanate, methylene-bis(cyclohexyl isocyanate), isophorone diisocyanate or hexamethylene diisocyanate. One type of such a diisocyanate compound may be used alone, or two or more types may be used in combination. It is preferred that the polyisocyanate compound has a flexible chain with a view to improving the flexibility of the adherence substance to be obtained. Specifically, it may, for example, be tolylene diisocyanate, m-xylylene diisocyanate or isophorone diisocyanate. Among them, tolylene diisocyanate or isophorone diisocyanate is particularly preferred.

### [POLYURETHANE PREPOLYMER]

The polyurethane prepolymer used to obtain the silyl group-containing polymer (S2) or (S3) is obtained by reacting the polyol compound with a polyisocyanate compound. The terminal of the polyurethane prepolymer is an isocyanate group or a hydroxy group, and it is suitably selected according to the method of introducing a hydrolyzable silyl group. That is, it may be an isocyanate group-terminated polyurethane prepolymer or a hydroxy group-terminated polyurethane prepolymer.

At the time of synthesizing the polyurethane prepolymer, in the case of obtaining an isocyanate group-terminated polyurethane prepolymer, the proportion of the polyol compound and the polyisocyanate compound to be reacted is preferably such that the isocyanate index is more than 100 and at most 200, more preferably from 105 to 170, wherein the isocyanate index is defined as 100 times the value of the molar ratio of "NCO groups of the polyisocyanate compound/OH groups of the polyol compound".

In the case of obtaining a hydroxy group-terminated polyurethane prepolymer, the proportion of the polyol compound and the polyisocyanate compound is preferably at least 50 and less than 100, more preferably from 50 to 98, by the isocyanate index.

The molecular weight of the polyurethane prepolymer is preferably, in the number average molecular weight, from 2,000 to 100,000, more preferably from 3,000 to 80,000.

For the reaction of the polyol compound with the polyisocyanate compound, a catalyst may be used. As the catalyst, a known urethane-forming catalyst may be employed. The urethane-forming catalyst may, for example, be an organic acid salt or organic metal compound, or a tertiary amine. Specifically, the organic acid salt or organic metal compound may, for example, be a tin catalyst such as dibutyltin dilaurate (DBTDL), a bismuth catalyst such as bismuth tris(2-ethylhexanoate), a zinc catalyst such as zinc naphthenate, a cobalt catalyst such as cobalt naphthenate or a copper catalyst such as copper 2-ethylhexanoate. The tertiary amine may, for example, be triethylamine, triethylenediamine or N-methylmorpholine.

The reaction temperature is preferably from 40 to 160°C, more preferably from 80 to 120°C.

### [POLYURETHANE POLYMER]

The polyurethane polymer to obtain the silyl group-containing polymer (S3) is obtained by further subjecting the polyurethane prepolymer to a chain extending reaction by using a chain extending agent. The polyurethane prepolymer is the same as in the case of the silyl group-containing polymer (S2).

The terminal of the polyurethane polymer is an isocyanate group, a hydroxy group or an amino group, and it is suitably selected according to the method to introduce a hydrolyzable silyl group. That is, the polyurethane polymer may be an isocyanate group-terminated polyurethane polymer, a hydroxy group-terminated polyurethane polymer or an amino group-terminated polyurethane polymer.

The molecular weight of the polyurethane polymer is preferably, in the number average molecular weight, from 4,000 to 500,000, more preferably from 8,000 to 250,000.

### <CHAIN EXTENDING AGENT>

As the chain extending agent, in the case where an isocyanate group terminated polyurethane prepolymer is used as the polyurethane prepolymer, a low molecular diol or a low molecular diamine is preferred. The low molecular diol is preferably, for example, ethylene glycol, propylene glycol, 1,4-butanediol or 1,6-hexanediol. The low molecular diamine may, for example, be an aliphatic diamine such as ethylenediamine, propylenediamine, trimethylenediamine, tetramethylenediamine, pentamethylenediamine, hexamethylenediamine or 2,2,4-trimethylhexamethylenediamine; an alicyclic diamine such as piperazine, isophoronediamine or dicyclohexylmethane-4,4'-diamine; or an aromatic diamine such as tolylenediamine, phenylenediamine or xylylenediamine.

In the case where a hydroxy group-terminated polyurethane prepolymer is used as the polyurethane prepolymer, a diisocyanate compound is preferred as the chain extending agent. The diisocyanate compound is the same as the above one used for the polyurethane prepolymer.

At the time of synthesizing the polyurethane polymer, the proportion of the polyurethane prepolymer and the chain extending agent to be reacted is suitably selected according to the molecular weight of the polyurethane prepolymer and the target molecular weight of the polyurethane polymer.

In the case of subjecting an isocyanate group-terminated polyurethane prepolymer to chain extension by using a low molecular diol as the chain extending agent, the proportion of the isocyanate group-terminated polyurethane prepolymer and the low molecular diol is preferably such that the isocyanate index is more than 100 and at most 200, more preferably more than 100 and at most 150, wherein the isocyanate index is defined as 100 times the value of the molar ratio of "NCO groups of the polyurethane prepolymer/OH groups of the low molecular diol". If the proportion is within this range, it is possible to obtain the isocyanate group-terminated polyurethane resin. Further, in the case of obtaining a hydroxy group-terminated polyurethane resin, the isocyanate index is preferably at least 50 and less than 100, more preferably from 50 to 98.

In the case of subjecting the isocyanate group-terminated polyurethane prepolymer to chain extension by using a low molecular diamine as the chain extending agent, the proportion of the isocyanate group-terminated polyurethane prepolymer and the low molecular diamine is preferably such that the isocyanate index is at least 50 and less than 100, and more preferably from 50 to 98, wherein the isocyanate index is defined as 100 times the value of the molar ratio of "NCO groups of the polyurethane prepolymer/NH₂ groups of the low molecular diamine". If the proportions is within this range, it is possible to obtain the amino group-terminated polyurethane polymer.

In the case of subjecting a hydroxy group-terminated polyurethane prepolymer to chain extension by using a diisocyanate compound as the chain extending agent to obtain the isocyanate group-terminated polyurethane polymer, the proportion of the hydroxy group-terminated polyurethane prepolymer and the diisocyanate compound is preferably such that the isocyanate index is more than 100 and at most 200, more preferably from 101 to 150, wherein the isocyanate index is defined as 100 times the value of the molar ratio of "NCO groups of the chain extending agent/OH groups of the polyurethane prepolymer".

Further, in the case of obtaining the hydroxy group-terminated polyurethane polymer, the isocyanate index is preferably at least 50 and less than 100, more preferably from 50 to 98.

For the reaction of the polyurethane prepolymer with the chain extending agent, a catalyst may be used. As the catalyst, the above-described urethane-forming catalyst is used. The reaction temperature is preferably from 40 to 160°C, more preferably from 80 to 120°C.

### <HYDROLYZABLE SILYL GROUP>

The hydrolyzable silyl group in the present invention is a silyl group having a hydrolyzable group. Specifically, it is preferably a silyl group represented by -SiXₐR⁰₍₃₋ₐ₎, wherein a is an integer of from 1 to 3. a is preferably from 2 to 3, most preferably 3.

Further, R⁰ is a C₁₋₂₀ monovalent organic group and is preferably a C₁₋₆ monovalent organic group. Specifically, it may, for example, be a methyl group, an ethyl group, a propyl group, a butyl group or a pentyl group. R⁰ may have a substituent. The substituent may, for example, be a methyl group or a phenyl group.

In the case where the hydrolyzable silyl group has a plurality of R⁰, each of R⁰'s may be the same or different from one another. That is, in the case where a is 1, each of two R⁰'s bonded to one silicon atom (Si), which are independent of-each other, represents a C₁₋₂₀ monovalent organic group which may have a substituent.

Further, the above X represents a hydroxy group (-OH) or a hydrolyzable group. The hydrolyzable group may, for example, be a -OR group (R is a hydrocarbon group having at most 4 carbon atoms). Such a -OR group is preferably an alkoxy group or an alkenyloxy group, particularly preferably an alkoxy group.

The number of the carbon atoms of the alkoxy group or the alkenyloxy group is preferably at most 4. Specifically, it may, for example, be a methoxy group, an ethoxy group, a propoxy group or a propenyloxy group. Among them, a methoxy group or an ethoxy group is more preferred. In this case, it is possible to further improve the curing speed of the curable composition.

In the case where the hydrolyzable silyl group has a plurality of X, each of X's may be the same or different from one another. That is, when a is 2 or 3, each of X's which are independent of one another, represents a hydroxy group or a hydrolyzable group.

The hydrolyzable silyl group is preferably a trialkoxysilyl group, more preferably a trimethoxysilyl group or a triethoxysilyl group, particularly preferably a trimethoxysilyl group. It is because the storage stability of the silyl group-containing polymer (S) is good, and the curing speed of the curable composition is high, which is suitable for production of the adherence substance.

### [INTRODUCTION OF HYDROLYZABLE SILYL GROUP]

In the present invention, a hydrolyzable silyl group is introduced to a molecular terminal of the polyol compound, the polyurethane prepolymer or the polyurethane polymer. The method of introducing a hydrolyzable silyl group may, for example, be a method (PQ1) using an isocyanate silane, a method (PQ2) using an aminosilane, a method (PQ3) using a mercaptosilane, a method (PQ4) using an epoxysilane or a method (PQ5) using a hydrosilane.

The proportion of the hydrolyzable silyl group to be introduced (hereinafter also referred to as the hydrolyzable silyl group introducing proportion) to the molecular terminal of the polyol compound, the polyurethane prepolymer or the polyurethane polymer is preferably from 50 to 100 mol%, more preferably from 80 to 100 mol%, provided that the proportion of all terminals that are theoretically reactive is defined as 100 mol%.

In the case where the silyl group-containing polymer (S) has a urethane bond or a urea bond, the ratio (molar ratio of MU/MS) of the total amount (MU) of urethane bonds and urea bonds to the amount (MS) of the hydrolyzable silyl group is not particularly limited, but MU/MS (molar ratio) is preferably from 1/1 to 100/1. If the ratio is within this range, adhesive strength and flexibility of the adherence substance can be controlled, and further, the stability of the adhesive strength is good. A urethane bond is formed by a reaction of an isocyanate group and a hydroxy group, and a urea bond is formed by a reaction of an isocyanate group and an amino group. In the case of the silyl group-containing polymer (S2) or (S3), the molar ratio MU/MS can be controlled by e.g. the molecular weight of the polyurethane prepolymer or the polyurethane polymer.

### [METHOD (PQ1) USING ISOCYANATE SILANE]

In the method (PQ1), the functional group at the terminal of the polyol compound, the polyurethane prepolymer or the polyurethane polymer is a group reactive with an isocyanate group, and the functional group at the terminal is reacted with an isocyanate silane to introduce a hydrolyzable silyl group.

The isocyanate silane may, for example, be isocyanatomethyltrimethoxysilane, 2-isocyanatoethyltrimethoxysilane, 3-isocyanatopropyltrimethoxysilane, 4-isocyanatobutyltrimethoxysilane, 5-isocyanatopentyltrimethoxysilane, isocyanatomethyltriethoxysilane, 2-isocyanatoethyltriethoxysilane, 3-isocyanatopropyltriethoxysilane, 4-isocyanatobutyltriethoxysilane, 5-isocyanatopentyltriethoxysilane, isocyanatomethylmethyldimethoxysilane, 2-isocyanatoethylethyldimethoxysilane, 3-isocyanatopropyltrimethoxysilane or 3-isocyanatopropyltriethoxysilane.

Among them, 3-isocyanatopropyltrimethoxysilane or 3-isocyanatopropyltriethoxysilane is preferred.

The group reactive with an isocyanate group may, for example, be a hydroxy group or an amino group. In the case of using a hydroxy group, for example, a polyol compound, a hydroxy group-terminated polyurethane prepolymer, a hydroxy group-terminated polyurethane polymer obtained by subjecting a hydroxy group-terminated polyurethane prepolymer further to a chain extending reaction by using a diisocyanate compound, or a hydroxy group-terminated polyurethane prepolymer obtained by reacting an isocyanate group-terminated polyurethane prepolymer with a low molecular diol may be used.

In the case of using an amino group, for example, an amino group-terminated polyurethane polymer obtained by reacting an isocyanate group-terminated polyurethane prepolymer with a low molecular diamine, or an amino group-terminated polyurethane polymer obtained by further subjecting the isocyanate group-terminated polyurethane prepolymer to a chain extending reaction by using a low molecular diamine may be used.

A catalyst may be used in this reaction. As the catalyst, the above-described urethane-forming catalyst may be employed.

### <METHOD (PQ2) USING AMINOSILANE>

In the method (PQ2), the functional group at the terminal of the polyol compound, the polyurethane prepolymer or the polyurethane polymer is a group reactive with an amino group, and the functional group at the terminal is reacted with an aminosilane to introduce a hydrolyzable silyl group. A group reactive with an amino group may be introduced at the terminal of the polyol compound, the polyurethane prepolymer or the polyurethane polymer, as the case requires.

The aminosilane may, for example, be 3-aminopropyltrimethoxysilane, 3-aminopropyltriethoxysilane, 3-aminopropyltriisopropoxysilane, 3-aminopropylmethyldimethoxysilane, 3-aminopropylmethyldiethoxysilane, 3-(2-aminoethyl)aminopropyltrimethoxysilane, 3-(2-aminoethyl)aminopropylmethyldimethoxysilane, 3-(2-aminoethyl)aminopropyltriethoxysilane, 3-(2-aminoethyl)aminopropylmethyldiethoxysilane, 3-(2-aminoethyl)aminopropyltriisopropoxysilane, 3-(2-(2-aminoethyl)aminoethyl)aminopropyltrimethoxysilane, 3-(6-aminohexyl)aminopropyltrimethoxysilane, 3-(N-ethylamino)-2-methylpropyltrimethoxysilane, N-(2-aminoethyl)aminomethyltrimethoxysilane, N-cyclohexylaminomethyltriethoxysilane, N-cyclohexylaminomethyldiethoxymethylsilane, ureidopropyltrimethoxysilane, ureidopropyltriethoxysilane, N-phenyl-3-aminopropyltrimethoxysilane, N-phenylaminomethyltrimethoxysilane, N-benzyl-3-aminopropyltrimethoxysilane, N-vinylbenzyl-3-aminopropyltriethoxysilane, N-(3-triethoxysilylpropyl)-4,5-dihydroimidazole, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane or N,N'-bis[3-(trimethoxysilyl)propyl]ethylenediamine.

Among them, 3-aminopropyltrimethoxysilane or 3-aminopropyltriethoxysilane is preferred.

The group reactive with an amino group may, for example, be an isocyanate group, an acryloyl group or a methacryloyl group. In the case of using an isocyanate group, for example, an isocyanate group-terminated polyurethane prepolymer, an isocyanate group-terminated polyurethane polymer obtained by subjecting a hydroxy group-terminated polyurethane prepolymer further to a chain extending reaction by using a diisocyanate compound, or an isocyanate group-terminated polyurethane polymer obtained by subjecting an isocyanate group-terminated polyurethane prepolymer further to a chain extending reaction by using a low molecular diol compound may be used.

In the case of using an acryloyl group or a methacryloyl group, for example, an isocyanate group-terminated polyurethane prepolymer reacted with a hydroxyalkyl acrylate or a hydroxyalkyl methacrylate, a polyol compound, or a hydroxy group-terminated polyurethane prepolymer or a hydroxy group-terminated polyurethane polymer reacted with acrylic acid or methacrylic acid may be used. The hydroxyalkyl acrylate may, for example, be hydroxyethyl acrylate or hydroxybutyl acrylate. The hydroxyalkyl methacrylate may, for example, be hydroxyethyl methacrylate or hydroxybutyl methacrylate. The reaction of an amino group with an isocyanate group is a urea bond-forming reaction. In this reaction, the above urethane-forming catalyst may be employed. The reaction of an amino group with an acryloyl group is Michael addition reaction.

### <METHOD (PQ3) USING MERCAPTOSILANE>

In the method (PQ3), the functional group at the terminal of the polyol compound, the polyurethane prepolymer or the polyurethane polymer is a group reactive with a mercapto group, and the functional group at the terminal is reacted with a mercaptosilane to introduce a hydrolyzable silyl group. A group reactive with a mercapto group may be introduced at the terminal of the polyol compound, the polyurethane prepolymer or the polyurethane polymer, as the case requires.

The mercaptosilane may, for example, be 3-mercaptopropyltrimethoxysilane, 3-mercaptopropylmethyldimethoxysilane, 3-mercaptopropyltriethoxysilane, 3-mercaptopropylmethyldiethoxysilane, mercaptomethyltrimethoxysilane or mercaptomethyltriethoxysilane. Among them, 3-mercaptopropyltrimethoxysilane or 3-mercaptopropyltriethoxysilane is preferred.

The group reactive with a mercapto group may, for example, be an isocyanate group, an acryloyl group or an allyl group. In the case of using an isocyanate group or an acryloyl group, the same compound as in the method (PQ2) using an aminosilane may be used. In the case of using an allyl group, the terminal of the polyurethane prepolymer or the polyurethane polymer is made into an isocyanate group and then is reacted with an allyl alcohol to obtain an allyl group.

In the reaction of a mercapto group and an isocyanate group, a catalyst may be employed, in the same manner as in a urethane-forming reaction. In the reaction of a mercapto group with an acryloyl group or an allyl group, a radical initiator is preferably used. The radical initiator may, for example, be azobisisobutyronitrile (AIBN).

### <METHOD (PQ4) USING EPOXYSILANE>

In the method (PQ4), the functional group at the terminal of the polyol compound, the polyurethane prepolymer or the polyurethane polymer is a group reactive with an epoxy group, and the functional group at the terminal is reacted with an epoxysilane to introduce a hydrolyzable silyl group. A group reactive with an epoxy group may be introduced at the terminal of the polyol compound, the polyurethane prepolymer or the polyurethane polymer, as the case requires.

As the epoxy silane, for example, 3-glycidoxypropyltrimethoxysilane, 3-glycidoxypropyltriethoxysilane, 3-glycidoxypropylmethyldimethoxysilane, 2-(3,4-epoxycyclohexyl)ethyltrimethoxysilane or 2-(3,4-epoxycyclohexyl)ethyltriethoxysilane is preferred. Among them, 3-glycidoxypropyltrimethoxysilane or 3-glycidoxypropyltriethoxysilane is preferred.

The group reactive with an epoxy group may, for example, be a hydroxy group or an amino group. With respect to each of the hydroxy group and the amino group, the same compound as in the method (PQ1) using an isocyanate silane may be used. As a catalyst in the reaction with an epoxy group, a known catalyst such as an amine or an acid anhydride may be employed. It may, for example, be a chain aliphatic polyamine, an alicyclic polyamine, an aromatic polyamine, a modified aliphatic polyamine or an imidazole compound. Particularly, a tertiary amine such as N,N-dimethylpiperazine, triethylenediamine, 2,4,6-tris(dimethylaminomethyl)phenol (DMP-30) or benzyldimethylamine (BDMA) is preferred.

### <METHOD (PQ5) USING HYDROSILANE>

In the method (PQ5), the functional group at the terminal of the polyol compound, the polyurethane prepolymer or the polyurethane polymer is a group capable of being hydrosilylated, and the functional group at the terminal is reacted with a hydrosilane to introduce a hydrolyzable silyl group. A group capable of being hydrosilylated may be introduced at the terminal of the polyol compound, the polyurethane prepolymer or the polyurethane polymer, as the case requires.

The hydrosilane may, for example, be trimethoxysilane, triethoxysilane, methyldiethoxysilane, methyldimethoxysilane, phenyldimethoxysilane or 1-[2-(trimethoxysilyl)ethyl]-1,1,3,3-tetramethyldisiloxane.

The group capable of being hydrosilylated may, for example, be an acryloyl group or an allyl group. With respect to each of the acryloyl group and the allyl group, the same compound as in the method (PQ3) using a mercaptosilane may be used. In this reaction, it is preferred to use a hydrosilylation catalyst. The hydrosilylation catalyst may, for example, be chloroplatinic acid.

### [ADDITIVES]

The curable composition containing the silyl group-containing polymer (S) may contain additives. As the additives, known additives may properly be used. The additives may, for example, be the after-mentioned curing agent, curing catalyst, dehydrating agent, substrate-anchoring force-improving agent (P), filler, reinforcing agent, stabilizer, flame retardant, antistatic agent, release agent and antifungal agent.

The curable composition containing the silyl group-containing polymer (S) has a low viscosity and can be applied without using any solvent, but it may contain a solvent.

In the curable composition containing the silyl group-containing polymer (S), it is preferred not to use a plasticizer. Particularly, it is preferred not to use an ester type plasticizer such as dioctyl phthalate. It is because, if an ester type plasticizer is used, the adhesion strength between the cured product (adherence substance) and the substrate such as a film to be separated together therewith may be decreased, and an adhesive deposit may result.

### [CURING AGENT]

The curable composition containing the silyl group-containing polymer (S) is cured by contact with water. Accordingly, it reacts with water in the atmosphere to undergo moisture curing. Otherwise, immediately before the curing, water (H₂O) may be added as a curing agent. In such a case, the amount of water is preferably from 0.01 to 5 parts by mass, more preferably from 0.01 to 1 part by mass, particularly preferably from 0.05 to 0.5 part by mass, per 100 parts by mass of the total amount of the silyl group-containing polymers (S1) to (S3), other hydrolyzable silyl group-containing polymer and the substrate-anchoring force-improving agent (P) having a hydrolyzable silyl group. The amount of the curing agent is adjusted to be at least 0.01 part by mass, whereby the curing can effectively be promoted, and the amount of the curing agent is adjusted to be at most 5 parts by mass, whereby the working time in use can be secured.

### [CURING CATALYST]

It is preferred to incorporate a curing catalyst (a curing accelerator) to accelerate the hydrolysis and/or crosslinking reaction of the hydrolyzable silyl groups to the curable composition containing the silyl group-containing polymer (S).

As such a curing catalyst, a known catalyst may suitably be used as a component to accelerate the reaction of the hydrolyzable silyl groups. Specifically, it may, for example, be an organic tin carboxylate such as dibutyltin diacetate, dibutyltin dilaurate, dioctyltin dilaurate, (n-C₄H₉)₂Sn(OCOCH=CHCOOCH₃)₂, (n-C₄H₉)₂Sn(OCOCH=CHCOO(n-C₄H₉))₂, (n-C₈H₁₇)₂Sn(OCOCH=CHCOOCH₃)₂, (n-C₈H₁₇)₂Sn(OCOCH=CHCOO(n-C₄H₉))₂ or (n-C₈H₁₇)₂Sn(OCOCH=CHCOO(iso-C₈H₁₇))₂; a sulfur-containing organic tin compound such as (n-C₄H₉)₂Sn(SCH₂COO), (n-C₈H₁₇)₂Sn(SCH₂COO), (n-C₈H₁₇)₂Sn(SCH₂CH₂COO), (n-C₈H₁₇)₂Sn(SCH₂COOCH₂CH₂OCOCH₂S), (n-C₄H₉)₂Sn(SCH₂COO(iso-C₈H₁₇))₂, (n-C₈H₁₇)₂Sn(SCH₂COO(iso-C₈H₁₇))₂, (n-C₈H₁₇)₂Sn(SCH₂COO(n-C₈H₁₇))₂ or (n-C₄H₉)₂SnS; an organic tin oxide such as (n-C₄H₉)₂SnO or (n-C₈H₁₇)₂SnO; a reaction product of an ester compound selected from the group consisting of ethyl silicate, dimethyl maleate, diethyl maleate, dioctyl maleate, dimethyl phthalate, diethyl phthalate and dioctyl phthalate, with the above-mentioned organic tin oxide; a chelate tin compound such as (n-C₄H₉)₂Sn(acac)₂, (n-C₈H₁₇)₂Sn(acac)₂, (n-C₄H₉)₂Sn(O-n-C₈H₁₇)(acac), (n-C₄H₉)₂Sn(O-iso-C₈H₁₇)(acac), (n-C₄H₉)₂Sn(OC(CH₃)CHCO₂C₂H₅)₂, (n-C₈H₁₇)₂Sn(OC(CH₃)CHCO₂C₂H₅)₂, (n-C₄H₉)₂Sn(OC₈H₁₇)(OC(CH₃)CHCO₂C₂H₃) or bisacetyl acetonate tin (where the above acac means an acetylacetonate ligand, and OC(CH₃)CHCO₂C₂H₅ means an ethyl acetoacetate ligand); a reaction product of an alkoxysilane selected from the group consisting of tetramethoxysilane, tetraethoxysilane and tetrapropoxysilane, with the above chelate tin compound; or an organic tin compound containing a -SnOSn- bond, such as (n-C₄H₉)₂(CH₃COO)SnOSn(OCOCH₃)(n-C₄H₉)₂ or (n-C₄H₉)₂(CH₃O)SnOSn(OCH₃)(n-C₄H₉)2.

Further, specific examples of the curing catalyst include a bivalent tin carboxylate such as tin 2-ethylhexanoate, tin n-octylate, tin naphthenate or tin stearate; a metal salt other than a tin salt of an organic carboxylic acid such as octylic acid, oleic acid, naphthenic acid or stearic acid; a calcium carboxylate, a zirconium carboxylate, an iron carboxylate, a vanadium carboxylate, a bismuth carboxylate such as bismuthtris-2-ethyl hexanoate, a lead carboxylate, a titanium carboxylate, a nickel carboxylate or the like; a titanium alkoxide such as tetraisopropyl titanate, tetrabutyl titanate, tetramethyl titanate or tetra(2-ethylhexyl titanate); an aluminum alkoxide such as aluminum isopropylate or mono-sec-butoxyaluminum diisopropylate; a zirconium alkoxide such as zirconium n-propylate or zirconium n-butyrate; a titanium chelate such as titanium tetraacetylacetonate, dibutyloxytitanium diacetylacetonate, titanium ethylacetoacetate, titanium octylene glycolate or titanium lactate; an aluminum chelate such as aluminum trisacetylacetonate, aluminum trisethylacetoacetate, or diisopropoxy aluminum ethylacetoacetate; a zirconium compound such as zirconium tetraacetylacetonate, zirconium bisacetylacetonate, zirconium acetylacetonate bisethyl acetoacetate or zirconium acetate; an acidic compound such as phosphoric acid, p-toluenesulfonic acid or phthalic acid; an aliphatic monoamine such as butylamine, hexylamine, octylamine, decylamine or laurylamine; an aliphatic diamine such as ethylenediamine or hexanediamine; an aliphatic polyamine such as diethylenetriamine, triethylenetetramine or tetraethylenepentamine; a heterocyclic amine such as piperidine, piperazine or 1,8-diazabicyclo(5.4.0)udecene-7; an aromatic amine such as metaphenylenediamine, an alkanolamine such as monoethanolamine, diethanolamine or triethanolamine; a trialkylamine such as triethylamine; a primary to tertiary ammonium acid salt made of the above amine and an organic acid such as an aliphatic monocarboxylic acid (such as formic acid, acetic acid, octylic acid or 2-ethylhexanoic acid), an aliphatic polycarboxylic acid (such as oxalic acid, malonic acid, succinic acid, glutaric acid or adipic acid), an aromatic monocarboxylic acid (such as benzoic acid, toluic acid or ethylbenzoic acid), an aromatic polycarboxylic acid (such as phthalic acid, isophthalic acid, terephthalic acid, nitrophthalic acid or trimellitic acid), a phenol compound (such as phenol or resorcinol), a sulfonic acid compound (such as an alkyl benzenesulfonic acid, toluenesulfonic acid or benzenesulfonic acid) or a phosphoric acid compound, or an inorganic acid such as hydrochloric acid, hydrobromic acid or sulfuric acid; an ammonium hydroxide such as triethylmethylammonium hydroxide, trimethylbenzylammonium hydroxide, hexyltrimethylammonium hydroxide, octyltrimethylammonium hydroxide, decyltrimethylammonium hydroxide, dodecyltrimethylammonium hydroxide, octyldimethylethylammonium hydroxide, decyldimethylethylammonium hydroxide, dodecyldimethylethylammonium hydroxide, dihexyldimethylammonium hydroxide, dioctyldimethylammonium hydroxide, didecyldimethylammonium hydroxide or didodecyldimethylammonium hydroxide; and an amine compound such as various modified amines to be used as a curing agent for an epoxy resin.

These curing catalysts may be used alone or in combination as a mixture of two or more of them. In a case where two or more of them are combined, it is preferred to combine, for example, an aliphatic monoamine or another above-mentioned amine compound to the above-mentioned metal-containing compound such as a reaction product of the above-mentioned bivalent tin carboxylate, organic tin carboxylate or organic tin oxide with an ester compound, since it is thereby possible to obtain an excellent curability.

In a case where a curing catalyst is to be added, its amount is preferably from 0.001 to 10 parts by mass, more preferably from 0.01 to 5 parts by mass, per 100 parts by mass of the total amount of the silyl group-containing polymers (S1) to (S3), other hydrolyzable silyl group-containing polymer and the substrate-anchoring force-improving agent (P) having a hydrolyzable silyl group. When the amount of the curing catalyst is adjusted to be at least 0.001 part by mass, the curing speed can effectively be accelerated, and when the amount of the curing catalyst is adjusted to be at most 10 parts by mass, it is possible to secure a working time at the time of its use.

### [DEHYDRATING AGENT]

In order to improve the storage stability, the curable composition containing the silyl group-containing polymer (S) may contain a small amount of a dehydrating agent within a range not to impair the effects of the present invention.

A specific example of such a dehydrating agent may, for example, be an alkyl orthoformate such as methyl orthoformate or ethyl orthoformate; an alkyl orthoacetate such as methyl orthoacetate or ethyl orthoacetate; a hydrolyzable organic silicone compound such as methyl trimethoxysilane, vinyl trimethoxysilane, tetramethoxysilane or tetraethoxysilane; or a hydrolyzable organic titanium compound. Among them, vinyl trimethoxysilane or tetraethoxysilane is preferred from the viewpoint of the cost and dehydrating ability.

In a case where a dehydrating agent is incorporated to the curable composition containing the silyl group-containing polymer (S), its amount is preferably from 0.001 to 30 parts by mass, more preferably from 0.01 to 10 parts by mass, per 100 parts by mass of the total amount of the silyl group-containing polymers (S1) to (S3), other hydrolyzable silyl group-containing polymer and the substrate-anchoring force-improving agent (P).

### [SUBSTRATE-ANCHORING FORCE-IMPROVING AGENT(P)]

To the curable composition containing the silyl group-containing polymer (S), a substrate-anchoring force-improving agent (P) may be incorporated. The substrate-anchoring force-improving agent (P) is an additive which improves the adhesion strength between the adherence substance layer and the substrate.

The substrate-anchoring force-improving agent (P) is preferably one or more selected from the group consisting of a silane coupling agent, an isocyanate compound and a urethane resin. It is particularly preferred to use a silane coupling agent, since the adhesion strength to the substrate will be improved by addition of a relatively small amount and in addition, substantially no bleed out from the adherence substance will occur.

As the silane coupling agent, a silane coupling agent having a hydrolyzable group is preferred. As a specific silane coupling agent having a hydrolyzable group, an isocyanate silane, an aminosilane, a mercaptosilane or an epoxysilane is preferred, and an aminosilane or an epoxysilane is particularly preferred. Such a silane may preferably, for example, be a compound specifically exemplified above in the methods (PQ1) to (PQ4) for introducing a hydrolyzable silyl group.

The isocyanate compound as the substrate-anchoring force-improving agent (P) is preferably, for example, a polyfunctional polyisocyanate such as a modified product of a known polyisocyanate compound. The modified product may, for example, be a trimethylolpropane adduct-type modified product, a biuret-type modified product or an isocyanurate-type modified product. Specific examples include DURANATE P301-75E (manufactured by Asahi Kasei Corporation, trimethylolpropane adduct-type HDI (hexamethylene diisocyanate), isocyanate group content: 12.9 mass%, solid content: 75 mass%) and CORONATE L (manufactured by Nippon Polyurethane Industry Co., Ltd., trimethylolpropane adduct-type TDI (trilenediisocyanate), isocyanate group content: 13.5 mass%, solid content: 75 mass%).

As the urethane resin as the substrate-anchoring force-improving agent (P), an isocyanate group-terminated urethane prepolymer or a hydroxy group-terminated urethane prepolymer may be used. The hydroxy group-terminated urethane prepolymer may, for example, be MP2000 (manufactured by CEMEDINE Co., Ltd.).

In the case of using the substrate-anchoring force-improving agent (P), the addition amount is preferably from 0.01 to 10 parts by mass, more preferably from 0.01 to 6 parts by mass per 100 parts by mass of the total amount of the silyl group-containing polymers (S1) to (S3) and other hydrolyzable silyl group-containing polymer. When it is at least 0.01 part by mass and at most 10 parts by mass, an adhesive deposit can be suppressed.

### [OTHER ADDITIVES]

The following filler, reinforcing agent, stabilizer, flame retardant, antistatic agent, release agent and antifungal agent may be incorporated to the curable composition containing the silyl group-containing polymer (S).

The fitter or reinforcing agent may, for example, be carbon black, aluminum hydroxide, calcium carbonate, titanium oxide, silica, glass, bone meal, wood meal or fiber flakes.

The stabilizer may, for example, be an antioxidant, an ultraviolet absorber or a light-stabilizer.

The flame retardant may, for example, be a chloroalkyl phosphate, dimethylmethyl phosphonate, ammonium polyphosphate or an organic bromine compound.

The antistatic agent may, for example, be a polymer surfactant or an inorganic salt.

The release agent may, for example, be wax, soap or silicone oil.

The antifungal agent may, for example, be pentachlorophenol, pentachlorophenol laurate or bis(tri-n-butyltin) oxide.

### [SOLVENT]

The solvent is not particularly limited, and it may, for example, be an aliphatic hydrocarbon, an aromatic hydrocarbon, a halogenated hydrocarbon, an alcohol, a ketone, an ester, an ether, an ester alcohol, a ketone alcohol, an ether alcohol, a ketone ether, a ketone ester or an ester ether.

Among them, it is preferred to employ an alcohol as the solvent, since the storage stability of the curable composition can thereby be improved. Such an alcohol is preferably an alkyl alcohol having from 1 to 10 carbon atoms, more preferably methanol, ethanol, isopropanol, isopentyl alcohol or hexyl alcohol, further preferably methanol or ethanol. Particularly when methanol is employed, if its amount is increased, the curing time of the curable composition can be prolonged. This is an effective technique to prolong a so-called pot life i.e. the time until the curable composition reaches the predetermined viscosity after its preparation.

In a case where a solvent is added to the first or second curable composition, its amount is preferably at most 500 parts by mass, more preferably from 1 to 100 parts by mass, per 100 parts by mass of the total amount of the silyl group-containing polymers (S1) to (S3), other hydrolyzable silyl group-containing polymer and the substrate-anchoring force-improving agent (P). If the amount exceeds 500 parts by mass, shrinkage of the cured product may occur along with evaporation of the solvent.

### <PROCESS FOR PRODUCIGN TOUCH PANEL>

The touch panel according to the present embodiment can be produced by a first step of contact-bonding the surface protective film 3 on the viewer side surface of a touch pad 2 via the first adherence substance layer 11 and a second step of contact-bonding a display module 1 and the touch pad 2 via the second adherence substance layer 12. Either of the first step and the second step may be carried out first.

### [FIRST STEP]

In the first step, a method (1) wherein first, the first curable composition is applied to one surface of the surface protective film 3, the curable composition is cured to form the first adherence substance layer 11, and the first adherence substance layer is contact-bonded to the touch pad 2, may be employed. In a case where the adhesion-facilitating treatment is applied to one surface of the surface protective film 3, the first curable composition is applied to the treated surface. A separator may be contact-bonded to the surface of the first adherence substance layer 11 immediately after curing and they are stored in such a state, and as the case requires, the separator is separated and removed to expose the surface of the first adherence substance layer 11, and the surface is contact-bonded to the touch pad 2.

Otherwise, a method (2) wherein the first curable composition is applied to one surface of a separator, the curable composition is cured to form the first adherence substance layer 11, and one of front and rear side surfaces of the first adherence substance layer 11 is contact-bonded to the touch pad 2 and the other to the surface protective film 3, may also be employed. The first adherence substance layer 11 may be stored as sandwiched between separators immediately after curing. The separator is separated and removed as the case requires.

In either method (1) or (2), as the separator, paper subjected to surface treatment with a release agent; a film or sheet made of an untreated polyolefin; a laminate having a layer made of a polyolefin laminated on a substrate of e.g. paper, or the like is preferably employed.

As the apparatus to apply the curable composition, various coaters may be utilized. It may, for example, be a gravure roll coater, a reverse roll coater, a kiss roll coater, a dip roll coater, a bar coater, a knife coater or a spray coater.

The curable composition containing the silyl group-containing polymer (S) is excellent in curing property and is quickly and strongly cured (moisture-cured) upon contact with moisture to obtain a cured product (adherence substance layer). The hydrolyzable silyl group (-SiXₐR⁰₍₃₋ₐ₎) contributes to the moisture curing.

The curing conditions for the first curable composition are set as required. For example, a curing catalyst is incorporated in the first curable composition, and the composition is applied to one surface of the surface protective film 3, heated e.g. in an oven and aged at room temperature, whereby the curable composition can be cured.

It is also effective to leave it in a humidified environment at the time of aging at room temperature or after such aging. At the time of curing, a predetermined amount of water may be added as a curing agent to the first curable composition, followed by sufficient mixing.

Heating by e.g. an oven is suitably set depending upon e.g. the heat resistance temperature of the surface protective film 3. For example, it is preferred to leave it in an environment of from 60 to 120°C for from about 1 to 30 minutes. Particularly in a case where the first curable composition contains a solvent, it is preferred to set a constant drying time. However, rapid drying is not desirable, since it causes foaming. Further, in the oven, or after taking it out from the oven, steam may be applied.

Among the above methods (1) and (2), the method (1) is preferred, whereby the adhesion strength between the surface protective film 3 and the first adherence substance layer 11 tends to be high. When the adhesion strength between the surface protective film 3 and the first adherence substance layer 11 is high, when the surface protective film 3 is separated, the adherence substance layer 11 is separated together with the surface protective film 3, and an adhesive deposit will hardly occur.

In the above method (1), in a case where primer treatment as the adhesion-facilitating treatment is applied to the surface protective film 3, when heating is carried out at the time of curing, the adhesion strength between the surface protective film 3 and the first adherence substance layer 11 will be high due to the reaction of the primer layer with the first curable composition. For example, heating at a relatively high temperature in a short time is effective in some cases. As the specific short time heating, heating at a temperature of from 80 to 160°C (preferably from 100 to 150°C) for from 0.5 to 5 minutes (preferably from 1 to 4 minutes) may, for example, be mentioned.

Further, in the above method (1), when the substrate-anchoring force-improving agent (P) is incorporated in the first curable composition, a high effect of improving the adhesion strength between the surface protective film 3 and the first adherence substance layer 11 will be obtained. That is, when the first curable composition applied to one surface of the surface protective film 3 is cured to form the first adherence substance layer 11, the surface protective film 3 and the first adherence substance layer 11 are bonded by curing of the curable composition. At the stage of curing, when the substrate-anchoring force-improving agent (P) is present in the first curable composition, the adhesion (anchor) between the surface protective film 3 and the first adherence substance layer 11 will be more strong. On the other hand, in the first adherence substance layer 11 after curing, curing is completed including the added substrate-anchoring force-improving agent (P), no more adhesion effect accompanying curing will be obtained. Thus, after curing is completed, the influence of the substrate-anchoring force-improving agent (P) is small, and the surface to be in contact with the touch pad 2 of the first adherence substance layer 11 will be low adhesive.

Particularly when the surface protective film 3 is made of a polyester material or a polyolefin material, the adhesion strength between the surface protective film 3 and the first adherence substance layer 11 tends to be insufficient, and accordingly, it is preferred to incorporate the substrate-anchoring force-improving agent (P) to the first curable composition and /or to apply the above adhesion-facilitating treatment to the adherence substance layer side surface of the substrate layer.

### [SECOND STEP]

In the second step, preferred is a method wherein the second curable composition is applied to one surface of a separator, the curable composition is cured to form the second adherence substance layer 12, the front surface of the second adherence substance layer 12 is contact-bonded to the display module 1 or the touch pad 2, and as the case requires, the separator is separated to expose the rear side of the second adherence substance layer 12, which is contact-bonded to the touch pad 2 or the display module 1 for lamination. In this method, a step of curing the second curable composition is carried out in a state where neither display module 1 nor touch pad 2 is laminated.

The separator and the apparatus to apply the curable composition are the same as in the first step. The curing conditions for the second curable composition are the same as the curing conditions for the first curable composition.

In the touch panel of the present invention, the first adherence substance layer 11 interposed between the surface protective film 3 and the touch pad 2 is made of a cured product of the curable composition containing the silyl group-containing polymer (S). Further, the second adherence substance layer 12 interposed between the display module 1 and the touch pad 2 is also preferably made of a cured product of the curable composition containing the silyl group-containing polymer (S).

The cured product of the curable composition containing the silyl group-containing polymer (S) has good weak adhesive properties, is excellent in the removability and in addition, has good temperature stability and has peel strength with a small increase with time even stored in high temperature environment, and maintains good removability. Here, excellent removability means that it is removable without an adhesive deposit.

With respect to the temperature stability, specifically, the value of the peel strength after storage in an atmosphere of 80°C for 6 hours is at most 5 times the standard value, more preferably at most 3 times, where the standard value is the peel strength (peel adhesive strength) after storage at 23°C for 30 minutes using a stainless steel as an adherend. In addition, the peel strength after storage in an atmosphere of 80°C for 6 hours using stainless steel as an adherend in the same manner, is preferably at most 8 N/25 mm, more preferably at most 1 N/25 mm. When the cured product has temperature stability of the above range, it can be suitably used for a touch panel.

According to the adherence substance layer made of a cured product of the first or second curable composition of the present invention, the temperature stability within the above range can be realized. The reason why such temperature stability is obtained is not clearly understood, and it is considered that the crosslinked structure derived from a polysiloxane bond formed by hydrolysis of the hydrolyzable silyl group of the silyl group-containing polymer (S) is influential.

The adherence substance layer made of a cured product of the first or second curable composition is excellent in the holding power, and even when a force in a plane direction is exerted to the interface between the adherence substance layer and the adherend, they are less likely to slip.

Further, the adherence substance layer made of a cured product of the first or second curable composition is excellent in the transparency, and is thereby suitably used as a pressure-sensitive adhesive layer provided on the viewer side of the display module 1.

Further, the adherence substance layer made of a cured product of the first or second curable composition is excellent in the wetability to an adherend. It is considered that flexibility of the structure derived from a polyol contributes to such good wetability. Particularly when the polyol has a linear structure having no branched structure, it has a molecular structure with which it is likely to move freely and acts to increase the flexibility. Further, when a polyol has a structure having a polyether framework as the main component, as the polarity of such a structure is relatively low, the wetability to an adherend tends to be good. Particularly, as the chain length of the polyether framework is longer, the flexibility and the wetability are higher.

When the wetability and the flexibility of the adherence substance layer are good, bubbles are less likely to remain in the interface between the adherence substance layer and the adherend, and the adherence substance layer will easily be removed and attached again.

Particularly when the silyl group-containing polymer (S) has a polyether framework, the peel electrostatic charge is suppressed, and favorable high speed peeling properties are likely to be obtained, such being preferred. That is, when the surface protective film 3 on the touch pad 2 is peeled, a static electricity (so-called peel electrostatic charge) is generated between the touch pad 2 and the surface protective film 3. This static electricity has adverse effects over the electric circuit of the touch pad 2, or the surface is likely to attract dust or dirt by the static electricity. Further, when the touch pad 2 on the display module 1 is peeled and attached again, if the peel electrostatic charge is generated, the performance of the display module 1 may be impaired such that the liquid crystal alignment of a liquid crystal panel is disturbed.

Further, in general, the peel strength of the adherence substance layer tends to be great when the pulling speed (peel speed) is higher. The peel strength at the time of peeling at a high speed being not great relative to the peel strength in the case of peeling at a low speed, i.e. good high speed peeling properties, is preferred, since the adherence substance layer can be smoothly separated even at a high speed.

### EXAMPLES

Now, the present invention will be described in further detail with reference to Examples. However, it should be understood that the present invention is by no means restricted to such Examples.

In the following, propylene oxide will be sometimes abbreviated as PO, caprolactone monomer as CL, 3-isocyanatopropyltrimethoxysilane (isocyanate group content: 19.2 mass%) as TMS and dibutyltin dilaurate as DBTDL. As water, pure water was used. ppm represents mass ppm in principle.

### REFERENCE PREPARATION EXAMPLE 1: Preparation of composite metal cyanide complex catalyst

By the following method, zinc hexacyanocobaltate having tert-butyl alcohol as an organic ligand (hereinafter referred to as TBA-DMC catalyst) was prepared. In this Example, polyol X is a polyol having number average molecular weight (Mn) of 1,000, obtained by addition-polymerizing propylene oxide to dipropylene glycol.

Firstly, in a 500 ml flask, an aqueous solution comprising 10.2 g of zinc chloride and 10 g of water, was put, and while stirring this aqueous solution at 300 rpm and maintaining it at 40°C, an aqueous solution comprising 4.2 g of potassium hexacyanocobaltate (K₃[Co(CN)]₆) and 75 g of water, was dropwise added over a period of 30 minutes. After completion of the dropwise addition, the mixture was further stirred for 30 minutes. Thereafter, a mixture comprising 40 g of ethylene glycol mono-tert-butyl ether (hereinafter abbreviated as EGMTBE), 40 g of tert-butyl alcohol (hereinafter abbreviated as TBA), 80 g of water and 0.6 of polyol X, was added to the above mixture, followed by stirring at 40°C for 30 minutes and then at 60°C for 60 minutes. The obtained reaction mixture was subjected to filtration over a period of 50 minutes by means of a circular filtration plate with a diameter of 125 mm and a quantitative filter paper for fine particles (No. 5C manufactured by ADVANTEC) under pressure (0.25 MPa) to separate solid (a cake containing a composite metal cyanide complex).

Then, to this cake containing the composite metal cyanide complex, a mixture comprising 18 g of EGMTBE, 18 g of TBA and 84 g of water, was added, followed by stirring for 30 minutes, whereupon pressure filtration (filtration time: 15 minutes) was carried out. To the cake containing the composite metal cyanide complex obtained by the filtration, a mixture comprising 54 g of EGMTBE, 54 g of TBA and 12 g of water, was further added, followed by stirring for 30 minutes, to obtain an EGMTBE/TBA slurry containing the composite metal cyanide complex having an organic ligand. This slurry was used as TBA-DMC catalyst.

5 g of this slurry was taken into a flask, preliminarily dried in a nitrogen stream and then dried under reduced pressure at 80°C for 4 hours. The obtained solid was weighed, whereby the concentration of the composite metal cyanide complex contained in this slurry was found to be 4.70 mass%.

### PREPARATION EXAMPLE 1: Preparation of silyl group-containing polymer (S1-1)

Into a 10 L stainless steel pressure resistant reactor equipped with a stirrer, 800 g of a polyoxypropylene diol (average hydroxy value=112 mgKOH/g) as an initiator and TBA-DMC catalyst as a polymerization catalyst were introduced. The amount of the TBA-DMC catalyst was 50 ppm to the finish mass.

After replacing the interior of the reactor with nitrogen, the temperature was raised to 140°C, and 80 g of PO was introduced into the reactor with stirring and reacted. This is a step to activate TBA-DMC catalyst by initially supplying a small amount of PO.

Then, after the pressure in the reactor decreased, 7,120 g of PO was supplied with stirring, and the temperature in the reactor was maintained to be 140°C, and the stirring speed was maintained to be 500 rpm for 11 hours to let the polymerization reaction proceed, thereby to obtain polyol A. This polyol A had an average hydroxy value of 11 mgKOH/g.

To a four-necked flask equipped with a stirrer, a reflux condenser, a nitrogen-introducing tube, a thermometer and a dropping funnel, 761.6 g of the polyol A obtained as described above, and 31.8 g of TMS as an isocyanate silane, were added, and DBTDL was added as a urethane-forming catalyst. The amount of the urethane-forming catalyst was adjusted to be an amount corresponding to 50 ppm to the total amount of the polyol A and TMS. And, the temperature was gradually raised to 80°C, and a reaction was carried out until the peak of NCO by IR (infrared spectroscopy) disappeared, to obtain a silyl group-containing polymer (S1-1). The introducing proportion of hydrolyzable silyl groups was 100 mol% based on the terminal hydroxy groups.

### PREPARATION EXAMPLE 2: Preparation of silyl group-containing polymer (S1-2)

In the same manner as in Preparation Example 1, using glycerol as an initiator, PO was subjected to ring opening polymerization to obtain polyol B having Mn=15,000 (average hydroxy value: 11.2 mgKOH/g). Then, to a four-necked flask equipped with a stirrer, a reflux condenser, a nitrogen-introducing tube, a thermometer and a dropping funnel, 1,000 g of the polyol B and 41.3 g of TMS as an isocyanate silane, were added, and DBTDL was added as a urethane-forming catalyst. The amount of the urethane-forming catalyst was adjusted to be an amount corresponding to 50 ppm to the total amount of the polyol B and TMS. And, the temperature was gradually raised to 80°C, and a reaction was carried out until the peak of NCO by IR disappeared, to obtain a silyl group-containing polymer (S1-2). The introducing proportion of hydrolyzable silyl groups was 100 mol% based on the terminal hydroxy groups.

### PREPARATION EXAMPLE 3: Preparation of polyester polyether type silyl group-containing polymer (S1-3)

### (FIRST STEP)

Into a 10 L stainless steel pressure resistant reactor equipped with a stirrer, 2,800 g of a polyoxypropylene diol (hydroxy group-based Mw=700) as an initiator and TBA-DMC catalyst as a polymerization catalyst were introduced. The amount of the TBA-DMC catalyst was 50 ppm to the finish mass, i.e. 50 ppm as the metal amount in the polymer after completion of the first step. Then, after replacing the interior of the reactor with nitrogen, the temperature was raised to 140°C, and 280 g of PO was introduced into the reactor with stirring and reacted. This is a step to activate TBA-DMC catalyst by initially supplying a small amount of PO.

Then, after the pressure in the reactor decreased, 1,640 g of PO and 3,280 g of CL were introduced into the reactor with stirring respectively at constant rates so that the supply amounts per unit time would be PO/CL=1/2 by the mass ratio. After completion of introduction of PO and CL, stirring was continued further for one hour. During the stirring, the temperature in the reactor was maintained to be 140°C, and the stirring speed was maintained to be 500 rpm to let the polymerization reaction proceed, thereby to obtain polyol C.

From ¹³C-NMR (¹³C nuclear magnetic resonance spectrum) measurement results, the obtained polyol C was confirmed to have a random copolymer chain of CL and PO. This polyol C had an average hydroxy value of 56.1 mgKOH/g.

In the obtained polyol, the content of bivalent groups (A) derived from CL was 41 mass%. Further, in the polyol, the content of the random copolymer chain of CL and PO was 61.5 mass%.

### (SECOND STEP)

To a four-necked flask equipped with a stirrer, a reflux condenser, a nitrogen-introducing tube, a thermometer and a dropping funnel, 658.9 g of the polyol C obtained as described above, and 206.9 g of TMS (NCO% = 19.7) as a silyl isocyanate compound were added, and DBTDL was added as a urethane-forming catalyst. The amount of DBTDL was adjusted to be an amount corresponding to 50 ppm to the total amount of the polyol C and TMS. And, the temperature was gradually raised to 80°C, and a reaction was carried out until the peak of NCO by IR disappeared, to obtain a polyester ether type silyl group-containing polymer (S1-3).

### PREPARATION EXAMPLE 4: Preparation of silyl group-containing polymer (S2-1)

359.4 g of polyoxypropylene diol having Mn=2,000 (average hydroxy value = 56.1 mgKOH/g) obtained by ring-opening polymerization of PO with propylene glycol and 60.0 g of isophorone diisocyanate (IPDI) were subjected to a reaction to obtain an isocyanate group-terminated polyurethane prepolymer (Mn: 5,000). As a catalyst, 0.01 g (25 ppm) of DBTDL was used. The isocyanate index was 150.

In the same manner as in Preparation Example 1, the obtained polyurethane prepolymer was reacted with 1.05 equivalent amount of 3-aminopropyltrimethoxysilane (KBM-903 manufactured by Shin-Etsu Chemical Co., Ltd.) to obtain a polymer (S2-1) having trimethoxysilyl groups. The introducing proportion of hydrolyzable silyl groups was 100 mol% based on the terminal hydroxy groups. The viscosity of the polymer (S2-1) was 150,000 mPa·s/25°C. The molar ratio MU/MS in the polymer (S2-1) was 3.0.

### PREPARATION EXAMPLE 5: Preparation of silyl group-containing polymer (S3-1)

373.3 g of a diol of a polyoxypropylene having Mn=2,000 (average hydroxy value = 56.1 mgKOH/g) obtained by ring-opening polymerization of PO with propylene glycol and 48.8 g of tolylene diisocyanate (TDI) were subjected to a reaction to obtain an isocyanate group-terminated polyurethane prepolymer (Mn: 40,000). As a catalyst, 0.01 g (25 ppm) of DBTDL was used. The isocyanate index was 150.

To the obtained urethane prepolymer, 431.6 g of a mixed solvent composed of ethyl acetate/methyl ethyl ketone = 1/1 (weight ratio) was added, and then 1,4-butanediol was added so that the molar ratio of NCO/OH became 1.04 based on the NCO groups in the prepolymer, to carry out a reaction (a chain extending reaction) to obtain an isocyanate group-terminated polyurethane resin (Mn: 41,000).

Then, 1.05 equivalent amount of aminopropyltrimethoxysilane based on the NCO groups in the obtained isocyanate group-terminated polyurethane resin was added. That is, the molar ratio as represented by NCO/NHR is about 0.95. Then, a reaction was carried out until the peak of NCO by IR disappeared, to obtain a polymer (S3-1) having trimethoxysilyl groups. The introducing proportion of hydrolyzable silyl groups was 100 mol% based on the terminal hydroxy groups.

The solution viscosity (solid content was 50 mass%) of the polymer (S3-1) was 3,000 mPa·s/25°C. Further, in the polymer (S3-1), the molar ratio MU/MS was 80. PREPARATION EXAMPLES 6 to 10: Preparation of curable compositions 1 to 5 The silyl group-containing polymer as described above, dibutyloxytitanium diacetylacetonate (Ti(OC₄H₉)₂(C₅H₇O₂)₂) (manufactured by NIHON KAGAKU SANGYO CO., LTD., NACEM TITANIUM) and dibutyltin dilaurate as curing catalysts and methanol as a solvent were mixed in a proportion as identified in Table 1 to obtain curable compositions 1 to 5.

The units of the blend amounts in Table 1 are "parts by mass" unless otherwise specified. The amount of the solvent was adjusted so that the solid content concentration of a curable composition to be obtained became 50 mass%.

**TABLE 1**

| | | Prep. Ex.6 | Prep. Ex.7 | Prep. Ex.8 | Prep. Ex.9 | Prep. Ex. 10 |
|---|---|---|---|---|---|---|
| | | Curable composition 1 | Curable composition 2 | Curable composition 3 | Curable composition 4 | Curable composition 5 |
| Silyl group- containing polymer | S1-1 | 100 | | 70 | | |
| | S1-2 | | 100 | | | |
| | S1-3 | | | 30 | | |
| | S2-1 | | | | 100 | |
| | S3-1 | | | | | 100 |
| Curing catalyst | Dibutoxytitanium bisacetylacetonate | 1.5 | 1.5 | 1.5 | | |
| | DBTDL | | | | 1 | 1 |
| Additive | Water | 0.03 | 0 | 0.03 | 0.03 | 0.03 |
| Solvent | Methanol | 100 | 100 | 100 | 100 | 100 |

### COMPARATIVE PREPARATION EXAMPLE 1: Preparation of acrylic resin type adhesive A1

To a four-necked flask equipped with a stirrer, a reflux condenser, a nitrogen-introducing tube, a thermometer and a dropping funnel, 37.5 parts by mass of ethyl acetate was introduced. Further, 100 parts by mass of 2-ethylhexyl acrylate was introduced to another container. 25 parts by mass of the monomer was added to the four-necked flask, and then the air in the four-necked flask was replaced with nitrogen gas. Then, 0.08 part by mass of azobisisobutyronitrile (AIBN) as a polymerization initiator was added, and the temperature in the flask was raised to 80°C with stirring in a nitrogen atmosphere to carry out an initial reaction for about 20 minutes. Further, while heating was continued, a mixture comprising 75 parts by mass of the remaining monomer, 32.5 parts by mass ethyl acetate and 0.24 part by mass of AIBN was successively added over a period of about 1.5 hours to carry out a reaction under reflux. Then, the temperature was maintained to be under reflux conditions further for 1.5 hours to carry out a reaction. Then, a solution having 0.25 part by mass of AIBN dissolved in 25 parts by mass of ethyl acetate was dropwise added over a period of 30 minutes under reflux conditions, and a reaction was carried out further for 2 hours. After completion of the reaction, the obtained reaction mixture was diluted with 35 parts by mass of ethyl acetate and 20 parts by mass of tert-butyl alcohol to obtain an acrylic resin type pressure-sensitive adhesive A1 comprising an acrylic resin solution having a solid content concentration of 40.1 mass%. In the acrylic resin type pressure-sensitive adhesive A1, the mass average molecular weight (Mw) of the acrylic resin was 550,000. The mass average molecular weight is a value as calculated as polystyrene measured by gel permeation chromatography.

### <PREPARATION OF ADHESIVE LAMINATE>

Preparation Examples 11 to 21 are examples wherein the curable composition obtained as described above was cured on a substrate to prepare an adhesive laminate. As the substrate, as representative examples of the surface protective film 3, an OPP film, a CPP (cast PP) film and a PE film were used.

Comparative Example 1 is an example wherein an acrylic resin type adhesive was cured on a substrate to prepare an adhesive laminate. As the substrate, a PET film was used.

### PREPARATION EXAMPLE 11: Preparation of adhesive laminate 1-OPP

An OPP film having a thickness of 40 µm, one surface of which was subjected to corona treatment as adhesion-facilitating treatment was used as the substrate. To the treated surface by corona treatment, the above obtained curable composition 1 was applied so that the thickness became about 15 µm and dried in a circulating oven at 100°C for 5 minutes and further aged at 23°C for one week, and then left to stand at 23°C under a relative humidity of 65% for 2 hours to be cured thereby to obtain an adhesive laminate 1-OPP.

### PREPARATION EXAMPLE 12: Preparation of adhesive laminate 1-CPP

An adhesive laminate 1-CPP was obtained in the same manner as in Preparation Example 11 except that the substrate was changed to a CPP film having a thickness of 40 µm, one surface of which was subjected to corona treatment as adhesion-facilitating treatment.

### PREPARATION EXAMPLE 13: Preparation of adhesive laminate 1-PET

An adhesive laminate 1-PET was obtained in the same manner as in Preparation Example 11 except that the substrate was changed to a PET film having a thickness of 25 µm, one surface of which was subjected to corona treatment as adhesion-facilitating treatment (manufactured by TOYOBO CO., LTD., Ester Film E5107). PREPARATION EXAMPLE 14: Preparation of adhesive laminate 2-PET

An adhesive laminate 2-PET was obtained in the same manner as in Preparation Example 11 except that the curable composition 2 was used instead of the curable composition 1, and that the substrate was changed to a PET film having a thickness of 25 µm, one surface of which was subjected to corona treatment as adhesion-facilitating treatment (manufactured by TOYOBO CO., LTD., Ester Film E5107).

### PREPARATION EXAMPLE 15: Preparation of adhesive laminate 3-PET

An adhesive laminate 3-PET was obtained in the same manner as in Preparation Example 11 except that the curable composition 3 was used instead of the curable composition 1, and that the substrate was changed to a PET film having a thickness of 25 µm, one surface of which was subjected to corona treatment as adhesion-facilitating treatment (manufactured by TOYOBO CO., LTD., Ester Film E5107). PREPARATION EXAMPLES 16 to 18: Preparation of adhesive laminates 4-OPP, 4-CPP and 4-PET

Adhesive laminates 4-OPP, 4-CPP and 4-PET were obtained respectively in the same manner as in Preparation Examples 11 to 13 except that the curable composition 1 was changed to the above obtained curable composition 4.

### PREPARATION EXAMPLES 19 to 21: Preparation of adhesive laminates 5-OPP, 5-CPP and 5-PET

Adhesive laminates 5-OPP, 5-CPP and 5-PET were obtained respectively in the same manner as in Preparation Examples 11 to 13 except that the curable composition 1 was changed to the above obtained curable composition 5.

### COMPARATIVE EXAMPLE 1

As the substrate, the same PET film as in Preparation Example 13 was used.

To the treated surface of the PET film by corona treatment, the acrylic resin type pressure-sensitive adhesive A1 obtained in the above Comparative Preparation Example 1 was applied so that the thickness became about 5 µm and dried in a circulating oven at 100°C for 5 minutes, further aged at 23°C for one week, and then left to stand at 23°C under a relative humidity of 65% for 2 hours to be cured to obtain a comparative adhesive laminate A1-PET.

### <EVALUATION METHOD>

Properties when the above obtained adhesive laminate was used, and the adherence substance layer was bonded to various adherends, were evaluated by the following method. As the adherend, a stainless steel to be a standard for measurement of the peel adhesive strength, a glass plate for a liquid crystal assuming the surface of a display module, a PET film assuming the front surface and the rear surface of a touch pad, and an acrylic plate were properly used.

### [ADHESIVE STRENGTH]

An adhesive laminate was sufficiently cooled to room temperature, and a test piece (width: 25mm) of the adhesive laminate was bonded to a substrate and press-bonded by a rubber roll having a mass of 2 kg, at a temperature of 23°C. After bonding, upon expiration of predetermined times as identified in Tables, the peel strength (180° peel at a tension speed of 300 mm/min, unit: N/25 mm) was measured by using a tensile tester (RTE-1210, manufactured by ORIENTEC CO., LTD.) as defined in JIS B 7721. The smaller this value is, the weaker the adhesive strength is, the easier the peeling is, and the more excellent the removability is. The value of the peel strength after 30 minutes from bonding is the "peel adhesive strength" in this specification. A case where an anchor failure resulted, that is, an adhesive deposit resulted and the adherence substance was broken, was evaluated as "S".

As the adherend, a 1.5 mm-thick stainless steel plate (SUS304 (JIS)) treated by bright annealing, a mirror surface and a rough surface of a 0.7 mm-thick glass plate (glass for liquid crystal), a mirror surface and a rough surface of a 1.5 mm-thick acrylic plate, and a 25 µm-thick non-treated (mirror surface) PET film, were used.

The evaluation results are shown in Tables 2 to 6. Table 2 shows results with respect to the adhesive laminate 1-PET and the comparative adhesive laminate A1-PET, Table 3 the adhesive laminate 2-PET, Table 4 the adhesive laminate 3-PET, Table 5 the adhesive laminate 4-PET, and Table 6 the adhesive laminate 5-PET. The rough surfaces of the glass plate and the acrylic plate are those of a glass plate and an acrylic plate the surfaces of which were polished by a No. 280 (in accordance with the abrasive grain sizes as defined in JIS R6001) polishing sheet, and are represented as "#280" in Tables.

**TABLE 2**

| Adhesive laminate | Adhesive laminate 1-PET | | | | | | A1-PET (comparison) |
|---|---|---|---|---|---|---|---|
| Adherend | SUS | Glass plate | | Acrylic plate | | PET | PET |
| | Mirror surface | Mirror surface | Rough surface (#280) | Mirror surface | Rough surface (#280) | Mirror surface | Mirror surface |
| Time | | | | | | | |
| After 0.5 hour from bonding | 0.08 | 0.09 | 0.08 | 0.11 | 0.08 | 0.10 | 0.13 |
| After 24 hours from bonding | 0.10 | 0.10 | 0.09 | 0.17 | 0.09 | 0.11 | 0.18 |
| After 72 hours (3 days) from bonding | 0.10 | 0.12 | 0.06 | 0.15 | 0.09 | 0.10 | 0.18 |
| After 168 hours (7 days) from | 0.11 | 0.13 | 0.10 | 0.22 | 0.10 | 0.12 | 0.19 |
| bonding After 336 hours (14 days) from bonding | 0.11 | 0.16 | 0.08 | 0.39 | 0.12 | 0.11 | 0.25 |
| After 672 hours (28 days) from bonding | 0.13 | 0.19 | 0.09 | 0.44 | 0.10 | 0.12 | 0.40 |

| | | | | | | | |
|---|---|---|---|---|---|---|---|
| (Unit: N/25 mm) | | | | | | | |

**TABLE 3**

| Adhesive laminate | Adhesive laminate 2-PET | | | | | |
|---|---|---|---|---|---|---|
| Adherend | SUS | Glass | plate | Acrylic | plate | PET |
| | Mirror surface | Mirror surface | Rough surface (#280) | Mirror surface | Rough surface (#280) | Mirror surface |
| Time | | | | | | |
| After 0.5 hour from bonding | 0.08 | 0.09 | 0.08 | 0.11 | 0.08 | 0.10 |
| After 24 hours from bonding | 0.10 | 0.10 | 0.09 | 0.17 | 0.09 | 0.11 |
| After 72 hours (3 days) from bonding | 0,10 | 0.12 | 0.09 | 0.15 | 0.09 | 0.10 |
| After 168 hours (7 days) from bonding | 0.11 | 0.13 | 0.10 | 0.22 | 0.10 | 0.12 |
| After 336 hours (14 days) from bonding | 0.11 | 0.16 | 0.08 | 0.30 | 0.10 | 0.12 |
| After 672 hours (28 days) from bonding | 0.13 | 0.17 | 0.09 | 0.32 | 0.12 | 0.11 |

| | | | | | | |
|---|---|---|---|---|---|---|
| (Unit: N/25 mm) | | | | | | |

**TABLE 4**

| Adhesive laminate | Adhesive laminate 3-PET | | | | | |
|---|---|---|---|---|---|---|
| Adherend | SUS | Glass | plate | Acrylic | plate | PET |
| | Mirror surface | Mirror surface | Rough Surface (#280) | Mirror surface | Rough surface (#280) | Mirror surface |
| Time | | | | | | |
| After 0.5 hour from bonding | 0.12 | 0.14 | 0.12 | 0.12 | 0.12 | 0.15 |
| After 24 hours from bonding | 0.15 | 0.15 | 0.14 | 0.15 | 0.14 | 0.17 |
| After 72 hours (3 days) from bonding | 0.15 | 0.18 | 0.09 | 0.20 | 0.14 | 0.15 |
| After 168 hours (7 days) from bonding | 0.17 | 0.20 | 0.15 | 0.23 | 0.15 | 0.18 |
| After 336 hours (14 days) from bonding | 0.17 | 0.24 | 0.12 | 0.38 | 0.18 | 0.17 |
| After 672 hours (28 days) from bonding | 0.20 | 0.29 | 0.14 | 0.45 | 0.15 | 0.18 |

| | | | | | | |
|---|---|---|---|---|---|---|
| (Unit: N/25 mm) | | | | | | |

**TABLE 5**

| Adhesive laminate | Adhesive laminate 4-PET | | | |
|---|---|---|---|---|
| Adherend | SUS | Glass | plate | PET |
| | Mirror surface | Mirror surface | Rough Surface (#280) | Mirror surface |
| Time | | | | |
| After 0.5 hour from bonding | 0.15 | 0.18 | 0.16 | 0.30 |
| After 24 hours from bonding | 0.20 | 0.20 | 0.18 | 0.40 |
| After 72 hours (3 days) from bonding | 0.22 | 0.24 | 0.17 | 0.45 |
| After 168 hours (7 days) from bonding | 0.28 | 0.28 | 0.20 | 0.49 |
| After 336 hours (14 days) from bonding | 0.22 | 0.30 | 0.19 | 0.52 |
| After 672 hours (28 days) from bonding | 0.21 | 0.35 | 0.18 | 0.55 |

| | | | | |
|---|---|---|---|---|
| (Unit: N/25 mm) | | | | |

**TABLE 6**

| Adhesive laminate | Adhesive laminate 5-PET | | | |
|---|---|---|---|---|
| Adherend | SUS | Glass | plate | PET |
| | Mirror surface | Mirror surface | Rough surface (#280) | Mirror surface |
| Time | | | | |
| After 0.5 hour from bonding | 3.0 | 4.8 | 3.0 | 5.0 |
| After 24 hours from bonding | 4.0 | 5.8 | 4.2 | 9.0 |
| After 72 hours (3 days) from bonding | 4.2 | 6.5 | 4.7 | 9.3 |
| After 168 hours (7 days) from bonding | 5.0 | 7.2 | 4.8 | 10.0 |
| After 336 hours (14 days) from bonding | 5.5 | 8.8 | 5.0 | 11.0 |
| After 672 hours (28 days) from bonding | 6.0 | 9.5 | 5.5 | 12.0 |

| | | | | |
|---|---|---|---|---|
| (Unit: N/25 mm) | | | | |

### [TEMPERATURE STABILITY]

An adhesive laminate was sufficiently cooled to room temperature, and a test piece (width: 25 mm) of the adhesive laminate was bonded to a substrate and press-bonded by a rubber roll having a mass of 2 kg at 23°C. After bonding, upon expiration of predetermined times as identified in Tables at storage temperatures as identified in Tables, the test piece was cooled to room temperature, and the peel strength was measured by the above method. As the adherend, a 1.5 mm-thick stainless steel plate (SUS304 (JIS)) treated by bright annealing, a mirror surface of a 0.7 mm-thick glass plate (glass for liquid crystal) and a 25 µm-thick non-treated (mirror surface) PET film were used.

The evaluation results are shown in Tables 7 to 11. Table 7 shows results with respect to the adhesive laminate 1-PET, Table 8 the adhesive laminate 2-PET, Table 9 the adhesive laminate 3-PET, Table 10 the adhesive laminate 4-PET and Table 11 the adhesive laminate 5-PET.

**TABLE 7**

| Adhesive laminate | Adhesive laminate 1-PET | | | | | | | | | | | |
|---|---|---|---|---|---|---|---|---|---|---|---|---|
| Adherend | SUS (mirror surface) | | | | PET (mirror surface) | | | | Glass (mirror surface) | | | |
| Storage temperature | 23°C | 80°C | 100°C | 120°C | 23°C | 80°C | 100°C | 120°C | 23°C | 80°C | 100°C | 120°C |
| After 1 hour from bonding | 0.09 | 0.10 | 0.14 | 0.24 | 0.10 | 0.12 | 0.20 | 0.49 | 0.11 | 0.11 | 0.14 | 0.22 |
| After 3 hours from bonding | 0.10 | 0.13 | 0.15 | 0.24 | 0.11 | 0.15 | 0.22 | 0.55 | 0.11 | 0.12 | 0.13 | 0.20 |
| After 6 hours from bonding | 0.09 | 0.12 | 0.17 | 0.28 | 0.10 | 0.14 | 0.30 | 0.62 | 0.09 | 0.13 | 0.16 | 0.26 |
| After 24 hours from bonding | 0.10 | 0.12 | 0.24 | 1.50 | 0.11 | 0.16 | 0.50 | 1.20 | 0.10 | 0.15 | 0.23 | 0.36 |
| After 48 hours from bonding | 0.10 | 0.13 | 0.26 | 3.60 | 0.11 | 0.15 | 0.56 | 2.80 | 0.10 | 0.15 | 0.24 | 0.91 |
| After 72 hours from bonding | 0.10 | 0.14 | 0.30 | 3.20 | 0.10 | 0.18 | 0.60 | 3.00 | 0.10 | 0.15 | 0.24 | 1.90 |

| | | | | | | | | | | | | |
|---|---|---|---|---|---|---|---|---|---|---|---|---|
| (Unit: N/25 mm) | | | | | | | | | | | | |

**TABLE 8**

| Adhesive laminate | Adhesive laminate 2-PET | | | | | | | | | | | |
|---|---|---|---|---|---|---|---|---|---|---|---|---|
| Adherend | SUS (mirror surface) | | | | PET (mirror surface) | | | | Glass (mirror surface) | | | |
| Storage temperature | 23°C | 80°C | 100°C | 120°C | 23°C | 80°C | 100°C | 120°C | 23°C | 80°C | 100°C | 120°C |
| After 1 hour from bonding | 0.09 | 0.10 | 0.13 | 0.23 | 0.10 | 0.11 | 0.19 | 0.47 | 0.10 | 0.10 | 0.13 | 0.21 |
| After 3 hours from bonding | 0.10 | 0.12 | 0.14 | 0.23 | 0.10 | 0.14 | 0.21 | 0.52 | 0.10 | 0.11 | 0.12 | 0.19 |
| After 6 hours from bonding | 0.09 | 0.11 | 0.16 | 0.27 | 0.10 | 0.13 | 0.29 | 0.59 | 0.09 | 0.12 | 0.15 | 0.25 |
| After bonding from bonding | 0.10 | 0.11 | 0.23 | 1.43 | 0.10 | 0.15 | 0.48 | 1.14 | 0.10 | 0.14 | 0.22 | 0.34 |
| After 48 hours from bonding | 0.10 | 0.12 | 0.25 | 3.42 | 0.10 | 0.14 | 0.53 | 2.66 | 0.10 | 0.14 | 0.23 | 0.86 |
| After 72 hours from bonding | 0.10 | 0.13 | 0.29 | 3.04 | 0.10 | 0.17 | 0.57 | 2.85 | 0.10 | 0.14 | 0.23 | 1.81 |

| | | | | | | | | | | | | |
|---|---|---|---|---|---|---|---|---|---|---|---|---|
| (Unit: N/25 mm) | | | | | | | | | | | | |

**TABLE 9**

| Adhesive laminate | Adhesive laminate 3-PET | | | | | | | | | | | |
|---|---|---|---|---|---|---|---|---|---|---|---|---|
| Adherend | SUS (mirror surface) | | | | PET (mirror surface) | | | | Glass (mirror surface) | | | |
| Storage temperature | 23°C | 80°C | 100°C | 120°C | 23°C | 80°C | 100°C | 120°C | 23°C | 80°C | 100°C | 120°C |
| After 1 hour from bonding | 0.11 | 0.12 | 0.17 | 0.29 | 0.12 | 0.14 | 0.24 | 0.59 | 0.13 | 0.13 | 0.17 | 0.26 |
| After 3 hours from bonding | 0.12 | 0.16 | 0.18 | 0.29 | 0.13 | 0.18 | 0.26 | 0.66 | 0.13 | 0.14 | 0.16 | 0.24 |
| After 6 hours from bonding | 0.11 | 0.14 | 0.20 | 0.34 | 0.12 | 0.17 | 0.36 | 0.74 | 0.11 | 0.16 | 0.19 | 0.31 |
| After 24 hours from bonding | 0.12 | 0.14 | 0.29 | 1.80 | 0.13 | 0.19 | 0.60 | 1.44 | 0.12 | 0.18 | 0.28 | 0.43 |
| After 48 hours from bonding | 0.12 | 0.16 | 0.31 | 4.32 | 0.13 | 0.18 | 0.67 | 3.36 | 0.12 | 0.18 | 0.29 | 1.09 |
| After 72 hours from bonding | 0.12 | 0.17 | 0.36 | 3.84 | 0.12 | 0.22 | 0.72 | 3.60 | 0.12 | 0.18 | 0.29 | 2.28 |

| | | | | | | | | | | | | |
|---|---|---|---|---|---|---|---|---|---|---|---|---|
| (Unit: N/25 mm) | | | | | | | | | | | | |

**TABLE 10**

| Adhesive laminate | Adhesive laminate 4-PET | | | | | | | | | | | |
|---|---|---|---|---|---|---|---|---|---|---|---|---|
| Adherend | SUS (mirror surface) | | | | PET (mirror surface) | | | | Glass (mirror surface) | | | |
| Storage temperature | 23°C | 80°C | 100°C | 120°C | 23°C | 80°C | 100°C | 120°C | 23°C | 80°C | 100°C | 120°C |
| After 1 hour from bonding | 0.15 | 0.16 | 0.18 | 0.20 | 0.18 | 0.20 | 0.25 | 0.51 | 0.18 | 0.20 | 0.22 | 0.23 |
| After 3 hours from bonding | 0.18 | 0.20 | 0.21 | 0.22 | 0.21 | 0.22 | 0.28 | 0.72 | 0.20 | 0.20 | 0.24 | 0.25 |
| After 6 hours from bonding | 0.20 | 0.26 | 0.29 | 0.25 | 0.22 | 0.28 | 0.35 | 0.79 | 0.22 | 0.16 | 0.30 | 0.26 |
| After bonding from bonding | 0.20 | 0.33 | 0.40 | 1.50 | 0.23 | 0.35 | 0.40 | 2.00 | 0.23 | 0.18 | 0.26 | 2.30 |
| After 48 hours from bonding | 0.22 | 0.41 | 0.52 | 2.30 | 0.23 | 0.40 | 0.55 | 2.40 | 0.23 | 0.18 | 0.28 | 2.80 |
| After 72 hours from bonding | 0.22 | 0.42 | 0.61 | 2.90 | 0.25 | 0.40 | 0.61 | 3.10 | 0.22 | 0.19 | 0.85 | 3.50 |

| | | | | | | | | | | | | |
|---|---|---|---|---|---|---|---|---|---|---|---|---|
| (Unit: N/25 mm) | | | | | | | | | | | | |

**TABLE 11**

| Adhesive laminate | Adhesive laminate 5-PET | | | | | | | | | | | |
|---|---|---|---|---|---|---|---|---|---|---|---|---|
| Adherend | SUS (mirror surface) | | | | PET (mirror surface) | | | | Glass (mirror surface) | | | |
| Storage temperature | 23°C | 80°C | 100°C | 120°C | 23°C | 80°C | 100°C | 120°C | 23°C | 80°C | 100°C | 120°C |
| After 1 hour from bonding | 3.00 | 3.10 | 4.00 | 4.20 | 3.20 | 3.70 | 4.80 | 6.20 | 3.00 | 3.50 | 3.80 | 4.20 |
| After 3 hours from bonding | 3.20 | 3.50 | 4.50 | 5.00 | 3.80 | 4.10 | 5.30 | 6.50 | 3.20 | 3.70 | 3.90 | 4.40 |
| After 6 hours from bonding | 3.50 | 3.80 | 5.10 | 5.90 | 4.30 | 4.30 | 5.50 | 6.80 | 3.30 | 3.60 | 3.90 | 4.90 |
| After 24 hours from bonding | 4.00 | 4.50 | 7.00 | 8.20 | 4.50 | 5.10 | 6.00 | 8.00 | 3.70 | 3.80 | 4.20 | 9.00 |
| After 48 hours from bonding | 4.10 | 4.90 | 8.50 | 9.20 | 4.60 | 5.30 | 6.30 | 9.50 | 3.90 | 3.80 | 4.50 | 11.00 |
| from bonding | 4.00 | 5.20 | 9.20 | 11.00 | 4.60 | 5.50 | 6.80 | 11.00 | 4.00 | 3.90 | 5.10 | 13.00 |

| | | | | | | | | | | | | |
|---|---|---|---|---|---|---|---|---|---|---|---|---|
| (Unit: N/25 mm) | | | | | | | | | | | | |

### [HOLDING POWER]

An adhesive laminate was sufficiently cooled to room temperature, and a test piece (width: 25 mm, length: 250 mm) of the adhesive laminate was bonded to one end of an adherend as identified in the following Tables 12 to 14 so that the area of 25 mm × 25 mm of the test piece was in contact with the adherend, and contact bonded by a roll. Then, the other end of the adherend was hung so that the test piece was suspended on the lower end of the adherend, and they were left at stand at a temperature of 60°C under a relative humidity of 50% for 20 minutes. Then, a certain load (200 g or 500 g) was exerted to the lower end of the test piece, and the slippage after 65 hours or seconds until falling was measured. A case where no slippage occurred after 65 hours was evaluated as NC (non creep), and a case where the test piece fell down was evaluated as ×.

As the adherend, a 1.5 mm-thick stainless steel plate (SUS304 (JIS)), a mirror surface of a 0.7 mm-thick glass plate (glass for liquid crystal) and a 25 µm-thick non-treated (mirror surface) PET film were used.

The evaluation results are shown in Tables 12 to 14. Table 12 shows results with respect to the adhesive laminates 1-PET, 1-OPP and 1-CPP, Table 13 the adhesive laminates 4-PET, 4-OPP and 4-CPP, and Table 14 the adhesive laminates 5-PET, 5-OPP and 5-CPP.

### [OPTICAL PROPERTIES]

With respect to the adhesive laminates shown in Tables 12 to 14, the total light transmittance and the haze were measured by the following methods. The results are summarized in Tables 12 to 14.

**TABLE 12**

| Adhesive laminate | | Adhesive laminate 1-CPP | | | | | | Adhesive laminate 1 -CPP | | | | | | Adhesive laminate 1-PET | | | | | |
|---|---|---|---|---|---|---|---|---|---|---|---|---|---|---|---|---|---|---|---|
| Holding power | Adherend | SUS | | Glass plate | | PET | | SUS | | Glass plate | | PET | | SUS | | Glass plate | | PET | |
| | Load(g) | 200 | 500 | 200 | 500 | 200 | 500 | 200 | 500 | 200 | 500 | 200 | 500 | 200 | 500 | 200 | 500 | 200 | 500 |
| | State after 65 hours | NC | NC | NC | NC | NC | NC | NC | NC | NC | NC | NC | NC | NC | NC | NC | NC | NC | NC |
| Total light transmittance (%) | | 93 | | | | | | 93 | | | | | | 92 | | | | | |
| Haze (%) | | 11 | | | | | | 0.9 | | | | | | 1.5 | | | | | |

**TABLE 13**

| Adhesive laminate | | Adhesive laminate 4-CPP | | | | Adhesive laminate 4-OPP | | | | Adhesive laminate 4-PET | | | |
|---|---|---|---|---|---|---|---|---|---|---|---|---|---|
| Holding power | Adherend | Glass plate | | PET | | Glass plate | | PET | | Glass plate | | PET | |
| | Load (g) | 200 | 500 | 200 | 500 | 200 | 500 | 200 | 500 | 200 | 500 | 200 | 500 |
| | State after 65hours | NC | NC | NC | NC | NC | NC | NC | NC | NC | NC | NC | NC |
| Total light transmittance (%) | | 93 | | | | 93 | | | | 91 | | | |
| Haze (%) | | 11 | | | | 0.9 | | | | 1.2 | | | |

**TABLE 14**

| Adhesive laminate | | Adhesive laminate 5-CPP | | | | Adhesive laminate 5-OPP | | | | Adhesive laminate 5-PET | | | |
|---|---|---|---|---|---|---|---|---|---|---|---|---|---|
| Holding power | Adherend | Glass plate | | PET | | Glass plate | | PET | | Glass plate | | PET | |
| | Load (g) | 200 | 500 | 200 | 500 | 200 | 500 | 200 | 500 | 200 | 500 | 200 | 500 |
| | State after 65 hours | NC | NC | NC | NC | NC | NC | NC | NC | NC | NC | NC | NC |
| Total light transmittance (%) | | 92 | | | | 93 | | | | 91 | | | |
| Haze (%) | | 11 | | | | | | | | 1.3 | | | |

With respect to the adhesive laminate 1-PET, the peel electrostatic charge and the high speed peeling properties were measured by the following methods. The results are shown in Table 15.

### [PEEL ELECTROSTATIC CHARGE]

On a glass plate washed with methyl ethyl ketone and dried, a pressure-sensitive adhesive sheet (adhesive laminate 1-PET) was bonded at room temperature and press-bonded by a rubber roll of 2 kg. 30 Minutes later, the pressure-sensitive adhesive sheet was peeled under conditions of 180° peel and a tension speed of 30 m/min by means of a high speed peeling tester (product name: TE-701 model, manufactured by Tester Sangyo Co., Ltd.). On the surface of the pressure-sensitive adhesive sheet immediately after peeling, a static electricity measuring apparatus (static electricity measuring apparatus KSD-0103, manufactured by Kasuga Electric Works Ltd.) was set, and the electrostatic charge (unit: V) was measured.

### [HIGH SPEED PEELING PROPERTIES]

On a SUS plate treated by bright annealing, washed with methyl ethyl ketone and dried, a pressure-sensitive adhesive sheet (adhesive laminate 1-PET) was bonded at room temperature and press-bonded by a rubber roll of 2 kg. 24 Hours later, the SUS plate was placed on a stand and fixed, and the pressure-sensitive adhesive sheet was peeled under conditions of 180° peel by means of a high speed peeling tester (product name: TE-701 model, manufactured by Tester Sangyo Co., Ltd.) to measure the peel adhesive strength. The tension speed was 300 mm/min or 30,000 mm/min (30 m/min).

**TABLE 15**

| | | Adhesive laminate 1-PET |
|---|---|---|
| Peel electrostatic charge | | 200 (V) |
| High speed peeling properties | 18_{0°} Peel adhesive strength at a tension speed of 300 mm/min after 24 hours from bonding | 0.08 |
| | | (N/25 mm) |
| | 180° Peel adhesive strength at a tension speed of 30,000 mm/min after 24 hours from bonding | 0.08 |
| | | (N/25 mm) |

From the above results, the present invention has the following effects.
(1) The adhesive laminate 1-PET having an adherence substance layer obtained by curing the curable composition S1-1 containing the silyl group-containing polymer (S1) has, as shown in Table 2, a peel strength (peel adhesive strength) at 23°C after 30 minutes of 0.08 N/25 mm to the PET adherend, and shows good weak adhesive properties. Further, no anchor failure resulted upon each expiration. That is, an adhesive deposit was not confirmed at all, and excellent removability is obtained. Further, the increase in the peel strength along with the lapse of time is small, and the increase with time of the adhesive strength is small.
   As shown in Table 7, when the adherend is stainless steel and the standard value is the peel strength (peel adhesive strength) at 23°C after 30 minutes, the value of the peel strength when stored at 80°C for 6 hours is at most 3 times, and excellent temperature stability of the adherence substance layer is obtained.
   Further, as shown in Table 7, the maximum value of the peel strength at storage temperatures of from 23 to120°C within a storage time of 72 hours to the PET adherend was so small as 3 N/25 mm. Accordingly, even when exposed to high temperature, the increase in the adhesive strength is small, and good removability is obtained.
   Further, as shown in Table 12, in all cases where the substrate is PET, CPP or OPP, the holding power to the PET adherend is good, and excellent transparency is obtained.
   Further, as shown in Table 15, the peel electrostatic charge and the high speed peeling properties are also good.
   Accordingly, the adherence substance layer obtained by curing the curable composition S1-1 was favorable as an adherence substance layer used to bond a surface protective film to a touch pad of a touch panel, and it can easily be peeled when the surface protective film is stained or broken.
   Further, the adhesive laminate 1-PET has, as shown in Table 2, a peel strength of 0.09 even to the glass adherend (mirror surface) and shows favorable weak adhesive properties. No anchor failure resulted upon each expiration, and excellent removability is obtained. The increase in the peel strength along with the lapse of time is small, and the increase with time of the adhesive strength is small.
   Further, as shown in Table 7, the maximum value of the peel strength at storage temperatures of from 23 to 120°C within a storage time of 72 hours to the glass adherend is so low as 1.9 N/25 mm. Accordingly, good temperature stability is obtained, and even when exposed to high temperature, the increase in the adhesive strength is small, and good removability is obtained.
   Further as shown in Table 12, the holding power to the glass adherend is good, and excellent transparency is obtained.
   Further, the adhesive laminate was bonded again after the above peeling test, and the adhesive laminate could be bonded again without leaving bubbles on the bonded surface.
   Further, as shown in Table 15, the peel electrostatic charge and the high speed peeling properties are also good.
   Therefore, the adhesive layer obtained by curing the curable composition S1-1 is suitable also as an adherence substance layer to contact-bond a display module and a touch pad of a touch panel, and when bonding failure occurs, they can easily be separated and bonded again. Further, at the time of disposal, the display module and the touch pad can easily be separated and sorted.
(2) The adhesive laminate 4-PET having an adherence substance layer obtained by curing the curable composition S2-1 containing the silyl group-containing polymer (S2) exhibits, as shown in Table 5, favorable weak adhesive properties to the PET adherend and the glass adherend (mirror surface). No anchor failure resulted upon each expiration, and good removability is obtained. The increase in the peel strength along with the lapse of time is small, and the increase with time of the adhesive strength is small.
   Further, the value of the peel strength after storage at 80°C for 6 hours in Table 10 is at most 3 times the peel adhesive strength (23°C, after 30 minutes) in Table 5, and excellent temperature stability of the adherence substance layer is obtained.
   Further, as shown in Table 10, the temperature stability is good to the PET adherend and the glass adherend as shown in Table 10, and even when exposed to high temperature, the increase in the adhesive strength is small, and good removability is obtained.
   Further, as shown in Table 13, the holding power to the PET adherend and the glass adherend is good in all cases where the substrate is PET, CPP or OPP, and excellent transparency is obtained.
   Further, the adhesive laminate was bonded again after the above peeling test, and the adhesive laminate could be bonded again without leaving bubbles on the bonded surface.
   Accordingly, the adherence substance layer obtained by curing the curable composition S2-1 is favorable as an adherence substance layer to bond a surface protective film to a touch pad of a touch panel, or as an adherence substance layer to contact-bond a display module to a touch pad.
   Particularly from the comparison between Tables 2 and 5, it is found that the adherence substance layer obtained by curing the curable composition S2-1 had a peel strength higher than that of the adherence substance layer obtained by curing the curable composition S1-1. Accordingly, in a touch panel, when an adherence substance layer obtained by curing the curable composition S1-1 is used as an adherence substance layer to bond a surface protective film to a touch pad, and an adherence substance layer obtained by curing the curable composition S2-1 is used as an adherence substance layer to contact-bond a display module and a touch pad, the touch pad and the display module will hardly be separated when the surface protective film is peeled from the touch pad in the touch panel.
(3) The same as the adherence substance layer obtained by curing the curable composition S2-1 applies to the adherence substance layer obtained by curing the curable composition S3-1 containing the silyl group-containing polymer (S3) from the results in Tables 6, 11 and 14.
(4) With the adhesive laminate A1-PET having an adherence substance layer obtained by curing the acrylic resin type pressure-sensitive adhesive A1, as shown in Table 2, the increase in the peel strength along with the lapse of time was significant.

### EXAMPLE 1

A touch panel having a structure shown in Fig. 1 was produced. As the surface protective film 3 and the first adherence substance layer 11, the above adhesive laminate 1-PET was used. As the second adherence substance layer 12, one (thickness: 15 µm) obtained by curing the curable composition 2 on one surface of a separator made of OPP was used. The material of a display screen of the display module 1 was glass (mirror surface) for liquid crystal, the material of the outer surface on the display module 1 side of the touch pad 2 was PET, and the material of the outer surface on the viewer side was PET.

The display module 1 and the touch pad 2 were bonded by means of the second adherence substance layer 12, and then they were peeled. On that occasion, the second adherence substance layer 12 was peeled from the glass as contact-bonded to PET, and no adhesive deposit resulted on the peeled surface of the glass. Immediately after the peeling, they were bonded again, and they could be favorably bonded again without leaving bubbles on the bonded surface.

Further, on the surface protective film 3 in the structure shown in Fig. 1, two sheets of the adhesive laminate 1-PET were overlaid and laminated so that the adherence substance layer faced the display module 1 side to obtain a touch panel having three layers of the surface protective film 3. The outermost surface protective film 3 and the second surface protective film 3 were continuously peeled, and no abnormality occurred in the electric operation of the touch panel.

### INDUSTRIAL APPLICABILITY

The adherence substance layer of the present invention has properties such as having a holding power so that slippage and separation will not easily occur, and having a low adhesive strength to such an extent that it can easily be separated and replaced when stained or broken. It is useful for a touch panel having a surface protective film of e.g. portable game machines, digital video cameras, car navigation systems, small music players, small video players, cellular phones, etc.

The entire disclosure of Japanese Patent Application No. 2009-182366 filed on August 5, 2009 including specification, claims, drawings and summary is incorporated herein by reference in its entirety.

### REFERENCE SYMBOLS

- 1:: Display module
- 2:: Touch pad
- 3:: Surface protective film
- 11:: First adherence substance layer
- 12:: Second adherence substance layer

## Claims

1. A touch panel comprising a display module, a touch pad laminated on a display screen of the display module and a surface protective film laminated on the viewer side of the touch pad, wherein between the surface protective film and the touch pad, a first adherence substance layer obtained by curing a first curable composition containing the flowing silyl group-containing polymer (S) is interposed:
silyl group-containing polymer (S): a silyl group-containing polymer having a polyether chain, a polyester chain and/or a polycarbonate chain in its main chain and having a hydrolyzable silyl group at its molecular terminal.

2. The touch panel according to Claim 1, wherein the silyl group-containing polymer (S) in the first curable composition contains the following silyl group-containing polymer (S1):
silyl group-containing polymer (S1): a silyl group-containing polymer obtained by introducing a hydrolyzable silyl group to a terminal of at least one polyol compound selected from the group consisting of a polyether polyol, a polyester polyol, a polycarbonate polyol and a polyether polyester polyol.

3. The touch panel according to Claim 1 or 2, wherein between the display module and the touch pad, a second adherence substance layer obtained by curing a second curable composition containing the above silyl group-containing polymer (S) is interposed.

4. The touch panel according to Claim 3, wherein the silyl group-containing polymer (S) in the second curable composition contains the above silyl group-containing polymer (S1), or the following silyl group-containing polymer (S2) or (S3):
silyl group-containing polymer (S2): a silyl group-containing polymer obtained by introducing a hydrolyzable silyl group to a terminal of a polyurethane prepolymer obtained by reacting at least one polyol compound selected from the group consisting of a polyether polyol, a polyester polyol, a polycarbonate polyol and a polyether polyester polyol with a polyisocyanate compound;
silyl group-containing polymer (S3): a silyl group-containing polymer obtained by introducing a hydrolyzable silyl group to a molecular terminal of a polyurethane polymer obtained by reacting at least one polyol compound selected from the group consisting of a polyether polyol, a polyester polyol, a polycarbonate polyol and a polyether polyester polyol with a polyisocyanate compound to obtain a polyurethane prepolymer, and further subjecting the polyurethane prepolymer to a chain extending reaction by a chain extending agent.

5. The touch panel according to any one of Claims 1 to 4, wherein the hydrolyzable silyl group is introduced by using at least one silane compound selected from the group consisting of an isocyanate silane, an aminosilane, a mercaptosilane, an epoxysilane and a hydrosilane.

6. The touch panel according to any one of Claims 1 to 5, wherein the hydrolyzable silyl group is a trialkoxysilyl group.

7. The touch panel according to any one of Claims 1 to 6, wherein each of the first adherence substance layer and the second adherence substance layer has a peel adhesive strength of at most 8 N/25 mm.

8. The touch panel according to any one of Claims 1 to 7, wherein the first curable composition contains a curing catalyst, and the first curable composition is cured in an atmosphere containing moisture.
